(19) Europäisches Patentamt
European Patent Office
Office européen des brevets

(11) Publication number: 0 010 178 B1

(12) EUROPEAN PATENT SPECIFICATION

(45) Date of publication of patent specification: 16.02.83

(51) Int. Cl.³: A 01 N 25/22, A 01 N 47/10

(21) Application number: 79103553.8

(22) Date of filing: 20.09.79

# (54) Herbicidal compositions which contain a thiocarbamate and an organophosphorous compound and their application.

(30) Priority: 20.09.78 US 944094
27.07.79 US 60603

(43) Date of publication of application:
30.04.80 Bulletin 80/9

(45) Publication of the grant of the patent:
16.02.83 Bulletin 83/7

(84) Designated Contracting States:
AT BE CH DE FR GB IT NL

(56) References cited:
BE - A - 537 873
FR - A - 2 198 699
FR - A - 2 239 939
US - A - 3 836 643

(73) Proprietor: STAUFFER CHEMICAL COMPANY
Westport Connecticut 06880 (US)

(72) Inventor: Gray, Reed Alden
19327 Portos Court
Saratoga California 95070 (US)
Inventor: Hyzak, Daniel Louis
20100 Pampas Court
Saratoga California 95070 (US)

(74) Representative: Jaeger, Klaus, Dr.rer.nat. Dipl.-Chem. et al,
Jaeger, Grams & Pontani Patentanwälte
Bergstrasse 48 1/2
D-8035 München-Gauting (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 010 178 B1

Courier Press, Leamington Spa, England

# Herbicidal compositions which contain a thiocarbamate and an organophosphorous compound and their application

## Background of the Invention

This invention relates to herbicidal compositions and methods of use. In particular, this invention relates to herbicidal compositions comprising an herbicidally active thiocarbamate in combination with an organophosphorus compound, the latter serving to prolong the effectiveness of a single application of the thiocarbamate herbicide in controlling undesired plant growth.

Thiocarbamates are well known in the agricultural art as herbicides useful for weed control in crops such as corn, potatoes, beans, beets, spinach, tobacco, tomatoes, alfalfa, and others. Thiocarbamates are primarily used in pre-emergence application. They have been found to be particularly effective when incorporated into the soil prior to the planting of the crop. As a herbicide, the thiocarbamate is most concentrated immediately after its application. How long thereafter the initial concentration is retained depends in large part on the particular soil used. Thus the rate at which the thiocarbamate herbicide concentration declines following its application tends to vary from one type of soil to the next. This is evident both in the observable extent of actual weed control and in the detectable presence of undegraded thiocarbamate remaining in the soil after considerable time has elapsed (FR—A—2 239 939).

To be more specific, the aforementioned French patent specification FR—A 2 239 939 discloses compositions which are considered to be effective by virtue of their herbicidal and insecticidal properties. Said compositions consist of three components, namely of thiocarbamates, N,N,N'-substituted ureas and O,O-diethyl-S-ethylthioethyl-phosphorodithioate. While the thiocarbamate is used for its well-known herbicidal properties, it may be speculated that the substituted urea is used as an antidote while the organophosphorous compound might have been used for its insecticidal properties. Nevertheless, the aforementioned art reference is silent as to such effects.

From the Belgian specification BE—A—537 873 there are known insecticidal compositions composed of an organophosphorous compound and a thiocarbamate ester. While neither of the components have any remarkable insect-repellent or insecticidal properties, a mixture of said two components is said to show a synergistic effect providing useful insect-repellent and insecticidal properties to such two-component mixtures. An especially superior insecticidal activity is claimed for such compositions including a vast variety of different components.

It has now been discovered that the soil persistence of certain herbicidally active thiocarbamates is significantly extended by the incorporation of certain organophosphorus compounds, which have no herbicidal activity of their own, into the herbicide formulation. This improvement in the soil persistence of the thiocarbamates manifests itself in a variety of ways. It can be shown, for example, that the rate of decrease of the thiocarbamate content of the soil is substantially lessened with the use of the organophosphorus compound. This is evidenced by soil analyses taken at regular intervals following application of the thiocarbamate herbicide. Improved soil persistence is also shown by herbicidal efficacy tests, wherein the degree of weed injury is measured after a set period of time following application of the herbicide. In such a test, the organophosphorus compound, which has no herbicidal activity of its own, is shown to increase the herbicidal effectiveness of the thiocarbamate by increasing the persistence of the latter in the soil, and thus prolonging its effective life. Other ways in which the effect manifests itself will be evident from the following description.

## Brief Description of the Invention

This invention relates to a novel herbicidal composition comprising

(a) an herbicidally effective amount of a thiocarbamate having the formula

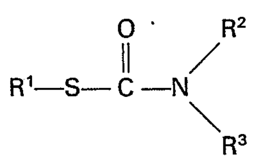

in which

$R^1$ is $C_1$—$C_6$ alkyl, optionally substituted with one, two, or three halogen atoms, and

and $R^2$ and $R^3$ are independently $C_1$—$C_6$ alkyl

(b) an amount of an organophosphorus compound having the formula

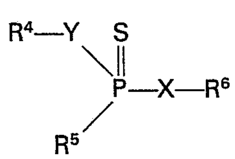

in which

$R^4$ is $C_1$—$C_6$ alkyl, $C_3$—$C_6$ alkenyl, $C_3$—$C_6$ alkynyl, or $C_5$—$C_7$ cycloalkyl, and is optionally substituted with one or more members selected from halo, cyano, $C_1$—$C_3$ alkoxy, and $C_1$—$C_3$ alkylthio,

$R^5$ is $C_1$—$C_4$ alkyl, $C_1$—$C_4$ alkoxy, or $C_1$—$C_4$ alkylthio,

$R^6$ is $C_1$—$C_{10}$ alkyl, $C_2$—$C_{10}$ alkenyl, or $C_2$—$C_4$ alkynyl, optionally substituted with one or more members selected from halo, nitro, cyano, $C_1$—$C_3$ alkoxy, and $C_1$—$C_3$ alkylthio, $C_5$—$C_7$ cycloalkyl, or —$(R^7)_m$—$\varphi$ in which

$R^7$ is $C_1$—$C_4$ alkyl, $C_2$—$C_4$ alkenyl, or $C_2$—$C_4$ alkynyl, optionally substituted with one or more members selected from halo and cyano,

m is zero or one, and

$\varphi$ is phenyl optionally substituted with one or more members selected from halo, trifluoromethyl, nitro, cyano, $C_1$—$C_3$ alkoxy, $C_1$—$C_3$ carbalkoxy, and $C_1$—$C_3$ alkylsulfinyl,

X is oxygen or sulfur, and

Y is oxygen or sulfur,

sufficient to extend the soil life of said thiocarbamate.

In a preferred embodiment of the invention, the compounds mentioned above are defined such that

$R^1$, $R^2$, and $R^3$ are as defined above,

$R^4$ is $C_1$—$C_4$ alkyl,

$R^5$ is selected from the group consisting of $C_1$—$C_4$ alkyl, $C_1$—$C_4$ alkoxy, and $C_1$—$C_4$ alkylthio,

$R^6$ is selected from the group consisting of phenyl, chlorophenyl, nitrophenyl, $C_7$—$C_9$ alkylsulfinylphenyl, $C_7$—$C_9$ phenylalkyl, and $C_2$—$C_6$ alkylthioalkyl,

X is oxygen or sulfur, and

Y is oxygen.

In a further preferred embodiment of the invention, the compounds are defined such that

$R^1$, $R^2$, and $R^3$ are as defined above,

$R^4$ is $C_1$—$C_4$ alkyl,

$R^5$ is selected from the group consisting of $C_1$—$C_4$ alkyl, $C_1$—$C_4$ alkoxy, and $C_1$—$C_4$ alkylthio,

$R^6$ is selected from the group consisting of phenyl, chlorophenyl, nitrophenyl, $C_7$—$C_9$ alkylsulfinylphenyl, and $C_2$—$C_6$ alkylthiophenyl,

X is oxygen or sulfur, and

Y is oxygen.

This invention further relates to a method of controlling undesirable vegetation comprising applying to the locus where control is desired both

(a) an herbicidally effective amount of a thiocarbamate having the formula

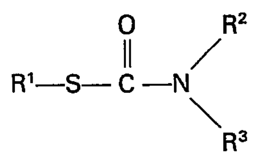

in which

$R^1$ is $C_1$—$C_6$ alkyl, $C_3$—$C_6$ alkenyl, $C_7$—$C_9$ phenylalkyl, or phenyl, and is optionally substituted with one, two, or three halogen atoms, and

$R^2$ and $R^3$ are either selected independently from $C_1$—$C_6$ alkyl and $C_5$—$C_7$ cycloalkyl, or combined to conjointly form $C_4$—$C_7$ alkylene;

and

(b) an amount of an organophosphorus compound having the formula

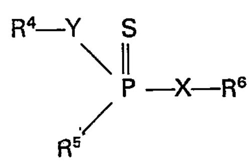

in which

$R^4$ is $C_1$—$C_6$ alkyl, $C_3$—$C_6$ alkenyl, $C_3$—$C_6$ alkynyl, or $C_5$—$C_7$ cycloalkyl, and is optionally substituted with one or more members selected from halo, cyano, $C_1$—$C_3$ alkoxy, and $C_1$—$C_3$ alkylthio,

$R^5$ is $C_1$—$C_4$ alkyl, $C_1$—$C_4$ alkoxy, or $C_1$—$C_4$ alkylthio,

$R^6$ is $C_1$—$C_{10}$ alkyl, $C_2$—$C_{10}$ alkenyl, or $C_2$—$C_4$ alkynyl, optionally substituted with one or more members selected from halo, nitro, cyano, $C_1$—$C_3$ alkoxy, and $C_1$—$C_3$ alkylthio, $C_5$—$C_7$ cycloalkyl, or —$(R^7)_m$—$\varphi$ in which

$R^7$ is $C_1$—$C_4$ alkyl, $C_2$—$C_4$ alkenyl, or $C_2$—$C_4$ alkynyl, optionally substituted with one or more members selected from halo and cyano,

m is zero or one, and

φ is phenyl optionally substituted with one or more members selected from halo, trifluoromethyl, nitro, cyano, $C_1$—$C_3$ alkoxy, $C_1$—$C_3$ carbalkoxy, and $C_1$—$C_3$ alkylsulfinyl;

X is oxygen or sulfur, and

Y is oxygen or sulfur,

sufficient to extend the soil life of said thiocarbamate, provided that said organophosphorus compound is not O,O-diethyl-S-ethyl-thioethyl-phosphorodithioate.

This invention further relates to a method of extending the soil life of a thiocarbamate having the formula

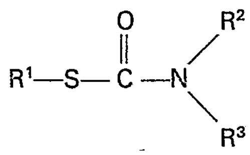

in which

$R^1$ is $C_1$—$C_6$ alkyl, $C_3$—$C_6$ alkenyl, $C_7$—$C_9$ phenylalkyl, or phenyl, and is optionally substituted with one, two, or three halogen atoms, and

$R^2$ and $R^3$ are either selected independently from $C_1$—$C_6$ alkyl and $C_5$—$C_7$ cycloalkyl, or combined to conjointly form $C_4$—$C_7$ alkylene;

which comprises applying to the soil containing said thiocarbamate or to which said thiocarbamate is to be applied an effective amount of an organophosphorus compound having the formula

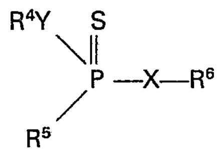

in which

$R^4$ is $C_1$—$C_6$ alkyl, $C_3$—$C_6$ alkenyl, $C_3$—$C_6$ alkynyl, or $C_5$—$C_7$ cycloalkyl, and is optionally substituted with one or more members selected from halo, cyano, $C_1$—$C_3$ alkoxy, and $C_1$—$C_3$ alkylthio,

$R^5$ is $C_1$—$C_4$ alkyl, $C_1$—$C_4$ alkoxy, or $C_1$—$C_4$ alkylthio,

$R^6$ is $C_1$—$C_{10}$ alkyl, $C_2$—$C_{10}$ alkenyl, or $C_2$—$C_4$ alkynyl, optionally substituted with one or more members selected from halo, nitro, cyano, $C_1$—$C_3$ alkoxy and $C_1$—$C_3$ alkylthio, $C_5$—$C_7$ cycloalkyl, or —$(R^7)_m$—φ in which

$R^7$ is $C_1$—$C_4$ alkyl, $C_2$—$C_4$ alkenyl, or $C_2$—$C_4$ alkynyl, optionally substituted with one or more members selected from halo and cyano,

m is zero or one, and

φ is phenyl optionally substituted with one or more members selected from halo, trifluoromethyl, nitro, cyano, $C_1$—$C_3$ alkoxy, $C_1$—$C_3$ carbalkoxy, and $C_1$—$C_3$ alkylsulfinyl,

X is oxygen or sulfur, and

Y is oxygen or sulfur.

As used herein, the terms "alkyl", "alkenyl", "alkynyl", and "alkylene" are intended to include both straight-chain and branched-chain radicals. All carbon atom ranges are intended to be inclusive of their upper and lower limits.

The term "halogen atom" is used to designate fluorine, chlorine, bromine, or iodine atoms, as well as any combination thereof.

The term "herbicide", as used herein, means a compound which controls or modifies the growth of plants. By the term "herbicidally effective amount" is meant an amount of compound which causes a modifying effect upon the growth of plants. By "plants" is meant germinant seeds, emerging seedlings and established vegetation, including roots and above-ground portions. Such controlling or modifying effects include all deviations from natural development, for example, killing, retardation, defoliation, desiccation, regulation, stunting, tillering, stimulation, leaf burn, dwarfing and the like.

The phrase "to extend the soil life of said thiocarbmate" is used herein to denote the effect whereby the molecular structure and/or herbicidal effectiveness of the thiocarbamate is maintained in substantially the same form it assumed when first applied to the locus. An extended soil life can be manifest in a slower rate of decline of weed-killing potency, or an increased half-life of thiocarbamate concentration in the soil. Other techniques of determining the soil life can be readily apparent to one skilled in the art.

Detailed Description of the Invention

According to the present invention, the above-described organophosphorus compound is added to the thiocarbamate in order to prolong the molecular integrity and herbicidal effectiveness of the latter. As the examples below indicate, there is no critical range of the ratio of these two components.

The soil-life-extending effect is observable over a broad range of ratios. It is most convenient, however, to apply the compounds at a ratio of from about 0.1:1 to about 50:1 (thiocarbamate:organophosphorus). Preferably, the ratio ranges from about 1:1 to about 25:1, and most preferably from about 1:1 to about 15:1.

Thiocarbamates which are useful in the present invention include S-ethyl di-n-propylthiocarbamate, S-ethyl hexahydro-1H-azepine-1-carbothioate, S-ethyl diisobutylthiocarbamate, S-n-propyl di-n-propylthiocarbamate, S-ethyl ethylcyclohexylthiocarbamate, S-n-propyl ethyl-n-butylthiocarbamate, S-p-chlorobenzyl diethylthiocarbamate, S-2,3,3-trichloroallyl diisopropylthiocarbamate, S-2,3-dichloroallyl diisopropylthiocarbamate, and S-benzyl di-sec-butylthiocarbamate.

Organophosphorus compounds which are useful in the present invention include O-ethyl-S-phenyl ethylphosphonodithioate, O-ethyl-S-p-chlorophenyl ethylphosphonodithioate, O,O-diethyl-S-ethylthioethyl phosphorodithioate, O,O-diethyl-O-p-methylsulfinylphenyl phosphorodithioate, O,O-diethyl-S-ethylthiomethyl phosphorodithioate, O,O-dimethyl-O-p-nitrophenyl phosphorothioate, O,O-diethyl-O-p-nitrophenyl phosphorothioate, O,O-dimethyl-O-phenyl phosphorothioate, O,O-diethyl-O-phenyl phosphorothioate, O,O-diisopropyl-O-phenyl phosphorothioate, O,O-dimethyl-O-benzyl phosphorothioate, O,O-diethyl-O-(2-phenylethyl) phosphorothioate, O,O-di-n-propyl-O-phenyl phosphorothioate, O-ethyl-S-ethyl-O-phenyl phosphorothioate, O,O-di-n-propyl-O-phenyl phosphorothioate, and O-methyl-S-phenyl methyl phosphonodithioate. Further examples are listed in the test data shown below.

The usefulness of many thiocarbamates as herbicides can be significantly broadened to include a wider variety of crops by the inclusion of an antidote in the herbicide formulation. The antidote protects the crop from injury by the herbicide, increasing the tolerance of the crop for the herbicide. The herbicide is thus rendered more selective in its action, retaining its potency against the undesired weeds, while showing a decreased herbicidal effect against the desired crop species.

For antidote descriptions and methods of use, reference is made to U.S. Patent No. 3,959,304, issued to E. G. Teach on May 25, 1976; U.S. Patent No. 3,989,503, issued to F. M. Pallos et al. on November 2, 1976; U.S. Patent No. 4,021,224, issued to F. M. Pallos et al. on May 3, 1977; U.S. Patent No. 3,131,509, issued to O. L. Hoffman on May 5, 1964; and U.S. Patent No. 3,564,768, issued to O. L. Hoffman on February 3, 1971.

Useful antidotes include acetamides having the formula

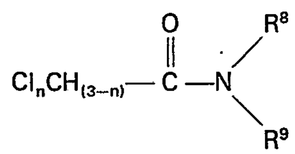

in which n is 1 or 2, and $R^8$ and $R^9$ are independently $C_1$—$C_{12}$ alkyl or $C_2$—$C_{12}$ alkenyl, or

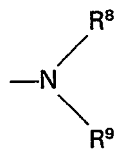

represents the group

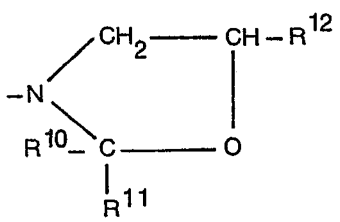

in which $R^{10}$ and $R^{11}$ are independently selected from the group consisting of hydrogen and methyl, and $R^{12}$ is selected from the group consisting of hydrogen, $C_1$—$C_4$ alkyl, and phenyl.

Examples of antidotes falling within the above formula are N,N-diallyl dichloroacetamide and N,N-diallyl chloroacetamide. An example falling outside the above formula is 1,8-naphthalic anhydride.

The antidote is applied in conjunction with the thiocarbamate and the organophosphorus compound in a non-phytotoxic antidotally effective amount. By "non-phytotoxic" is meant an amount of the antidote which causes at most minor injury to the desired crop species. By "antidotally effective" is meant an amount of the antidote which substantially decreases the extent of injury caused by the thiocarbamate to the desired crop species. The preferred ratio of herbicide to antidote is from about 0.1:1 to about 30:1. The most preferred range is from about 3:1 to about 20:1.

The following examples are offered to illustrate the compositions, methods, and effectiveness of the present invention, and are not intended to limit the invention in any way.

Example 1
Soil Persistence Tests

This example shows, by periodic chemical analyses of soil composition, the effectiveness of the organophosphorus compounds of the present invention in extending the soil life of the thiocarbamate herbicides.

A one-pint (0.5 liter) glass canning jar containing 250 grams (g) of soil (on an air-dry basis) was used for each test. Soils of three different textures were used: a loamy sand from Sunol, California; a silty loam from Thurman, Iowa; and a loam from Tracy, California. The relative amounts of sand, silt, and clay of each soil type were determined by mechanical means, and the quantity of organic matter and the acidity (pH) were determined chemically. The results of these analyses are shown below:

TABLE I

Soil Analyses

| Source | Composition (Weight %) Sand | Silt | Clay | Organic Matter (Weight %) | pH |
|---|---|---|---|---|---|
| Sunol, CA | 64 | 29 | 7 | 4 | 6.8 |
| Thurman, IA | 32 | 56 | 12 | 3 | 7.2 |
| Tracy, CA | 50 | 30 | 20 | 4.7 | 6.1 |

The test compounds or combinations were dissolved in water at concentrations calculated such that a 5.0 $cm^3$ aliquot contained quantities of active ingredients to the desired application rates when added to the jar. The thiocarbamates used in these tests were applied in the form of emulsifiable liquid concentrates containing an antidote to prevent crop injury. The concentrates were appropriately diluted to correspond to an application rate of 6.0 lb/A (6.72 kilograms/hectare) of active ingredient. Of the organophosphorus compounds tested, O,O-diethyl-O-phenyl phosphorodithioate was applied as a technical liquid diluted for an application rate of 0.5 lb/A (0.56 kilograms/hectare) or 1.0 lb/A (1.12 kilograms/hectare), and O-ethyl-S-phenyl ethylphosphonodithioate was applied as an emulsifiable liquid concentrate diluted for an application rate of 4.0 lb/A (4.48 kilograms/hectare) of active ingredient.

Thus, a 5.0 $cm^3$ aliquot of an aqueous mixture, containing the thiocarbamate, the antidote, and the organophosphorus additive in appropriate concentrations, was transferred by pipette to the jar and incorporated into the soil with a spatula. The jar was then sealed with a lid and shaken manually for approximately thirty seconds.

Following such treatment, the soil was seeded with approximately fifty barnyardgrass *(Echinochloa crusgalli)* seeds and two seeds of DeKalb XL—45A corn. The soil was then moistened to field capacity and the jar was placed unsealed in a greenhouse where the temperature was maintained at approximately 70 to 80°F (21 to 27°C) and the soil was moistened periodically.

The tests were performed in duplicate and a separate jar was used for each test. After a specified interval, two jars were removed from the greenhouse, stripped of their foliar plant material, sealed tightly, and frozen to await chemical analysis. After an additional interval, a second pair was removed and similarly treated. In all, six such pairs for each application rate were prepared for analysis, including one pair taken immediately after treatment with the test chemicals for use as a control.

Each prepared sample was macerated with 2.0 liters of water in a Waring Blender, then transferred to a 4.0 liter flask. Approximately 10.0 milliliters (ml) of an anti-foaming agent was added. The mixture was distilled rapidly, and approximately 400 ml of distillate was collected. Five drops of concentrated hydrochloric acid were added to the distillate to suppress emulsion formation. The thiocarbamate was extracted from the distillate with two 2.0 ml portions of isooctane. The extracts were then combined for analysis for thiocarbamate content by gas chromatography.

In Tables II and III, the chromatogram data has been converted to equivalent soil concentrations in parts per million (ppm) by weight of thiocarbamate. These tables list the results as averages for each pair of duplicates.

The tables clearly show that the thiocarbamate content declined with time in each type of soil

tested. They further show that such decline was substantially lessened by the presence of the organophosphorus compound. The effect of the organophosphorus compound on the Sunol soil is particularly evident from 21 days on in Table II and from three weeks on in Table III, by comparison of the experimental entries with the control. The higher figures for the experimental entries are a clear indication that the rate of decline is substantially decreased due to the presence of the organophosphorus compound. A similar effect on the Tracy soil is evident from three days on in Table II and from one week on in Table III. Finally, a similar effect is observed in the Thurman soil from seven days on in Table II and from two weeks on in Table III.

TABLE II

SOIL PERSISTENCE TEST RESULTS

Herbicide: S-ethyl di-n-propylthiocarbamate (active ingredient) in 12:1 weight ratio with N,N-diallyl dichloroacetamide (antidote)

Application Rate: 6.72 kg/ha

| Organophosphorus Additive | Application Rate (kg/ha) | Amount of Herbicide Present in Soil (ppm active ingredient) [a] Days Following Application: 0 | 3 | 7 | 14 | 21 | 28 |
|---|---|---|---|---|---|---|---|
| | | Soil used: from Sunol, California | | | | | |
| None (control) | – | 11.71 | 9.97 | 7.88 | 6.12 | 0.76 | 0.71 |
| O,O-Diethyl-O-phenyl phosphorothioate | 0.56 | 11.43 | 10.25 | 8.41 | 6.88 | 5.38 | 2.28 |
| O,O-Diethyl-O-phenyl phosphorothioate | 1.12 | 12.10 | 10.23 | 10.91 | 6.79 | 5.74 | 3.95 |
| O-Ethyl-S-phenyl ethylphosphonodithioate | 4.48 | 10.36 | 11.70 | 8.05 | 5.17 | 3.18 | 1.04 |
| | | Soil used: from Tracy, California | | | | | |
| None (control) | – | 10.59 | 2.58 | 0.24 | 0.12 | 0.00 | – (b) |
| O,O-Diethyl-O-phenyl phosphorothioate | 0.56 | 12.05 | 9.05 | 7.26 | 0.82 | 0.41 | – |
| O,O-Diethyl-O-phenyl phosphorothioate | 1.12 | 12.02 | 10.04 | 7.58 | 1.23 | 0.38 | – |
| O-Ethyl-S-phenyl ethylphosphonodithioate | 4.48 | 10.24 | 9.54 | 1.48 | 0.30 | 0.00 | – |
| | | Soil used: from Thurman, Iowa | | | | | |
| None (control) | – | 15.79 | 8.75 | 0.40 | 0.27 | 0.22 | – |
| O,O-Diethyl-O-phenyl phosphorothioate | 0.56 | 12.24 | 9.38 | 5.87 | 0.51 | 0.43 | – |
| O,O-Diethyl-O-phenyl phosphorothioate | 1.12 | 12.68 | 10.88 | 9.26 | 0.55 | 0.39 | – |
| O-Ethyl-S-phenyl ethylphosphonodithioate | 4.48 | 11.47 | 8.88 | 4.29 | 0.24 | 0.18 | – |

(a) Each figure shown represents the average of two samples.

(b) Dashes represent samples not analyzed.

TABLE III

SOIL PERSISTENCE TEST RESULTS

Herbicide: S-ethyl diisobutylthiocarbamate (active ingredient) in 24:1 weight ratio with N,N-diallyl dichloroacetamide (antidote)

Application Rate: 6.72 kg/ha

| Organophosphorus Additive | Application Rate (kg/ha) | Amount of Herbicide Present in Soil (ppm active ingredient)[a] Weeks Following Application: 0 | 1 | 2 | 3 | 4 | 5 |
|---|---|---|---|---|---|---|---|
| | | Soil used: from Sunol, California | | | | | |
| None (control) | — | 9.00 | 7.30 | 6.15 | 3.35 | 0.68 | 0.30 |
| O,O-Diethyl-O-phenyl phosphorothioate | 1.12 | 9.40 | 7.10 | 6.55 | 5.25 | 5.18 | 3.65 |
| | | Soil used: from Tracy, California | | | | | |
| None (control) | — | 8.05 | 1.25 | 0.13 | 0.17 | 0.07 | 0.03 |
| O,O-Diethyl-O-phenyl phosphorothioate | 1.12 | 7.95 | 7.45 | 6.05 | 5.65 | 4.84 | 0.66 |
| | | Soil used: from Thurman, Iowa | | | | | |
| None (control) | — | 8.35 | 7.00 | 0.16 | 0.11 | 0.07 | 0.07 |
| O,O-Diethyl-O-phenyl phosphorothioate | 1.12 | 8.35 | 7.10 | 4.90 | 2.11 | 1.18 | 0.37 |

(a) Each figure shown represents the average of the two samples.

## Example 2

### Herbicidal Activity Improvement Tests

This example offers herbicidal activity test data to show the effectiveness of the organophosphorus additives in improving the herbicidal activity of thiocarbamates. The effect is observed by comparing the extent of weed control in test flats treated with a thiocarbamate against that occurring in similar flats treated with both the thiocarbamate and an organophosphorus compound.

As in Example 1, the thiocarbamate used in this test was applied in the form of an emulsifiable liquid concentrate containing 6 lb/gal (0.72 kg/l) active ingredient. In several of the tests as indicated, an antidote was included in the formulation to prevent crop injury. The organophosphorus compounds were primarily used in technical form, although emulsifiable liquids, granules, and microcapsules were also used, as indicated.

Stock solutions were prepared by adding appropriate amounts of the formulated test chemicals to 100 ml mixtures containing equal parts of water and acetone. Five ml of a stock solution was then added to 1.36 kg of soil containing approximately 5% moisture in a 5-gallon (18.9 liter) rotary mixer where the soil and stock solution were mixed for 10 to 20 seconds.

The soil was then placed in aluminum flats which were 2.5 inches (6.4 cm) deep, 3.5 inches (8.9 cm) wide, and 7.5 inches (19.0 cm) long. The soil was tamped and leveled with a row marker to impress six rows across the width of the flat. The test weeds varied from test to test and included the following:

| COMMON NAME | SCIENTIFIC NAME |
|---|---|
| yellow foxtail | *Setaria lutescens* (Weigel) Hubb. |
| barnyardgrass | *Echinochloa crusgalli* (L.) Beauv. |
| milo | *Sorghum bicolor* (L.) Moench |
| barley | *Hordeum vulgare* (L.) |
| giant foxtail | *Setaria faberi* Herrm |
| wild cane | *Sorghum bicolor* (L.) Moench (variant of milo) |

Corn was also planted in some of the tests. The corn used was DeKalb XL—45A corn of species *Zea mays* (L.).

Sufficient seeds were planted to produce several seedlings per 2.5 cm in each row. The flats were then placed in a greenhouse maintained at 70 to 85°C and watered daily by sprinkler.

Three weeks after treatment, the degree of weed control and corn injury were estimated and recorded as percentage control compared to the growth of the same species in an untreated check flat of the same age. The rating scale ranges from 0 to 100%, where 0 equals no effect with plant growth equal to the untreated control, and 100 equals complete kill.

The tables which follow list the results of these tests. A control experiment is included in each table for comparison. Substantial improvements in average percent weed control over the control experiment are evident in each table at all application rates of the organophosphorus additive. While all the data in any single table was obtained at the same time under the same conditions, variations exist from one table to the next due to the difficulty in duplicating environmental conditions on different dates. The variations are also due to the fact that different weed combinations and/or soils were used. On the whole, however, it is clear that herbicidal efficacy of the thiocarbamate three weeks after application was much improved by the use of the organophosphorus additive.

TABLE IV

HERBICIDAL ACTIVITY ON BARLEY, BARNYARDGRASS, MILO AND GIANT FOXTAIL

Herbicide: S-Ethyl di-n-propylthiocarbamate as 0.72 kg/l emulsifiable liquid containing, where shown, N,N-diallyl dichloroacetamide antidote in 12:1 weight ratio

Application Rate: 3.36 kg/ha

Soil Source: Tracy, California

Evaluation Time: 3 weeks after treatment

| Organophosphorus Additive | Application Rate (kg/ha) | Without Antidote | | With Antidote | |
|---|---|---|---|---|---|
| | | Average % Weed Control | % Corn Injury | Average % Weed Control | % Corn Injury |
| None (Control) | – | 65 | 0 | 58 | 0 |
| O-Ethyl-S-phenyl ethylphosphono-dithioate (4E) (a) | 0.56 | 92 | 60 | 95 | 0 |
| | 1.12 | 100 | 100 | 100 | 20 |
| | 2.24 | 100 | 80 | 100 | 0 |
| | 4.48 | 100 | 100 | 99 | 0 |
| O-Ethyl-S-phenyl ethylphosphono-dithioate (10G) (b) | 0.56 | 97 | 90 | 78 | 0 |
| | 1.12 | 100 | 80 | 81 | 0 |
| | 2.24 | 100 | 80 | 88 | 0 |
| | 4.48 | 100 | 90 | 99 | 10 |
| O-Ethyl-S-p-chlorophenyl ethylphosphono-dithioate (4E) | 0.56 | 81 | 0 | | |
| | 1.12 | 90 | 20 | | |
| | 2.24 | 100 | 75 | | |
| | 4.48 | 100 | 80 | | |
| O-Ethyl-S-p-chlorophenyl ethylphosphono-dithioate (10G) | 0.56 | 66 | 0 | | |
| | 1.12 | 84 | 0 | | |
| | 2.24 | 82 | 30 | | |
| | 4.48 | 96 | 60 | | |

TABLE IV (Continued)

| Organophosphorus Additive | Application Rate (kg/ha) | Without Antidote | | With Antidote | |
|---|---|---|---|---|---|
| | | Average % Weed Control | % Corn Injury | Average % Weed Control | % Corn Injury |
| O,O-Diethyl-S-ethylthioethyl phosphorodithioate (technical) | 1.12 | 80 | 20 | | |
| | 2.24 | 85 | 40 | | |
| | 4.48 | 87 | 50 | | |
| O,O-Diethyl-O-p-methylsulfinylphenyl phosphorodithioate (technical) | 1.12 | 96 | 60 | | |
| | 2.24 | 100 | 95 | | |
| | 4.48 | 100 | 90 | | |
| O,O-Diethyl-S-ethylthiomethyl phosphorodithioate (technical) | 1.12 | 97 | 75 | | |
| | 2.24 | 98 | 90 | | |
| | 4.48 | 98 | 80 | | |
| O,O-Dimethyl-O-p-nitrophenyl phosphorothioate (technical) | 1.12 | 98 | 70 | | |
| | 2.24 | 95 | 70 | | |
| | 4.48 | 100 | 90 | | |

(a) 4E: emulsifiable liquid containing 0.48 kg/l active ingredient.

(b) 10G: granular formulation containing 10% by weight active ingredient.

TABLE V

HERBICIDAL ACTIVITY ON YELLOW FOXTAIL, BARNYARDGRASS AND WILD CANE

Herbicide: S-Ethyl di-n-propylthiocarbamate as 0.72 kg/l emulsifiable liquid

Application Rate: 3.36 kg/ha

Evaluation Time: 3 weeks after treatment

| Organophosphorus Additive | Application Rate (kg/ha) | Tracy, CA Soil | | Thurman, IA Soil | |
|---|---|---|---|---|---|
| | | Average % Weed Control | % Corn Injury | Average % Weed Control | % Corn Injury |
| None (Control) | – | 4 | 0 | 14 | 0 |
| O,O-Dimethyl-O-phenyl phosphorothioate (technical) | 0.56 | 18 | 0 | 16 | 0 |
| | 1.12 | 26 | 0 | 34 | 0 |
| | 2.24 | 30 | 0 | 44 | 0 |
| O,O-Diethyl-O-phenyl phosphorothioate (technical) | 0.56 | 48 | 0 | 38 | 0 |
| | 1.12 | 81 | 0 | 76 | 0 |
| O,O-Diisopropyl-O-phenyl phosphorothioate (technical) | 0.56 | 40 | 0 | 30 | 0 |
| | 1.12 | 42 | 0 | 46 | 0 |
| | 2.24 | 56 | 0 | 58 | 0 |
| O,O-Di-n-propyl-O-phenyl phosphorothioate (technical) | 0.56 | 30 | 0 | 44 | 0 |
| | 1.12 | 50 | 0 | 50 | 0 |
| | 2.24 | 86 | 0 | 81 | 0 |
| O,O-Dimethyl-O-benzyl phosphorothioate (technical) | 1.12 | 32 | 0 | 32 | 0 |
| | 2.24 | 54 | 0 | 38 | 0 |
| O,O-Diethyl-O-(2-phenylethyl) phosphorothioate (technical) | 1.12 | 32 | 0 | 32 | 0 |
| | 2.24 | 46 | 0 | 32 | 0 |

TABLE VI

HERBICIDAL ACTIVITY ON YELLOW FOXTAIL, BARNYARDGRASS, MILO AND WILD CANE

Herbicide: S-Ethyl di-n-propylthiocarbamate as 0.72 kg/l emulsifiable liquid

Application Rate: 3.36 kg/ha

Evaluation Time: 3 weeks after treatment

Soil Source: Tracy, CA.

| Organophosphorus Additive | Application Rate kg/ha | | | | | |
|---|---|---|---|---|---|---|
| | Average % Weed Control | | | | | |
| | 0 (control) | 0.14 | 0.28 | 0.56 | 1.12 | 2.24 |
| O-Ethyl-S-phenyl ethylphosphonothioate (technical) | 20 | – | 49 | 72 | 90 | 93 |
| O,O-Diethyl-O-phenyl phosphorothioate (technical) | 20 | 88 | 91 | 94 | 96 | – |
| O,O-Diethyl-O-phenyl phosphorothioate (microcapsule) | 20 | 89 | 93 | 94 | 95 | – |
| O,O-Dimethyl-O-phenyl phosphorothioate (technical) | 20 | 32 | 54 | 72 | 87 | – |

TABLE VII

HERBICIDAL ACTIVITY ON YELLOW FOXTAIL, BARNYARDGRASS, MILO AND WILD CANE

Herbicide: S-Ethyl di-n-propylthiocarbamate as 0.72 kg/l emulsifiable liquid

Application Rate: 3.36 kg/ha

Evaluation Time: 3 weeks after treatment

Soil Source: Thurman, Iowa

| | Average % Weed Control | | | | |
|---|---|---|---|---|---|
| Organophosphorus Additive / Application Rate (kg/ha) | 0 | 0.56 | 1.12 | 2.24 | 4.48 |
| O,O-Diethyl-O-phenyl phosphorothioate (technical) | 22 | 60 | 62 | 82 | 92 |
| O-Ethyl-S-phenyl ethylphosphonodithioate (technical) | 22 | 8 | 16 | 24 | 28 |
| O-Methyl-S-phenyl methylphosphonodithioate (technical) | 22 | 12 | 8 | 8 | 12 |
| O,O-Diethyl-O-(2-phenylethyl) phosphorothioate (technical) | 22 | 14 | 20 | 46 | 64 |
| O,O-Di-n-propyl-O-phenyl phosphorothioate (technical) | 22 | 38 | 50 | 70 | 84 |
| O-Ethyl-S-ethyl-O-phenyl phosphorothioate (technical) | 22 | 36 | 56 | 76 | 90 |

Example 3

Accelerated Soil Persistence Tests

The tests shown in this example are similar to those of Example 1, except that the soil was pre-treated to magnify and accelerate its effect in causing the herbicide content to decline. The soil from Sunol, California, described in Example 1 was used in all tests.

A. *Soil Pre-Treatment*

A solution was prepared by diluting an emulsifiable liquid concentrate containing 6 lb/gal (0.72 kg/l) of the herbicide S-ethyl di-n-propylthiocarbamate in 100 ml of water, such that the resulting concentration of herbicide in the solution was 4000 mg/l. Five ml of this solution was then added to 10 lb. (4.54 kg) of soil and the mixture was mixed in a rotary mixer for 10—20 seconds.

The soil was then placed in round plastic containers, 9 inches (22.9 cm) in diameter by 9 inches (22.9 cm) deep. The soil was tamped and leveled with a row marker to impress three rows across the width of each container. Two rows were seeded with DeKalb XL—45A corn (*Zea mays)*, and one row was seeded with barnyardgrass *(Echinochloa crusgalli)*. Sufficient seeds were planted to produce several seedlings per row. The containers were then placed in a greenhouse maintained at 20°C to 30°C and watered daily by sprinkler.

Five weeks after treatment, the soil was allowed to dry out and the plant foliage was removed. The soil was then passed through a 0.25 inch (0.64 cm) screen to remove plant roots and clods, and then passed through a 2 millimeter (mm) screen.

B. *Soil Persistence Test*

A 100-gram quantity (air-dry basis) of the pre-treated soil was placed in an 8 ounce (0.24 liter) wide-mouth glass bottle. The same emulsifiable concentrate described in Part A above was appropriately diluted in water such that a 5 ml portion added to the soil would produce a herbicide concentration of 6 ppm (weight) in the soil. A selected extender compound in technical (nonformulated) form was then diluted in an acetone-water mixture such that a one ml portion added to the solid would produce a concentration of 4 ppm (weight). On these bases, the herbicide and extender were added to the bottle containing the soil. The bottle was then sealed with a lid and shaken manually for approximately 15 minutes.

Following such treatment, the soil was moistened with 20 ml deionized water. The bottle was then covered with a watch glass to maintain aerobic conditions and to prevent rapid soil drying, and placed in a controlled environmental chamber in darkness, where the temperature was maintained at 25°C.

Two days later, the bottle was removed from the environmental chamber and 50 ml of water and 100 ml of toluene were added. The bottle was then tightly sealed with a lid containing a cellophane® liner, and vigorously shaken on a variable speed, reciprocating shaker (Eberback Corp. Model No. 6000) set at approximately 200 excursions per minute for one hour. After shaking, the bottle contents were allowed to settle, and a 10 ml aliquot of toluene was transferred by pipette into a glass vial and sealed with a polyseal cap. The toluene extract was analyzed for herbicide content by gas chromatography. The chromatogram data was then converted to equivalent soil concentrations in parts per million (ppm) by weight of the herbicide.

The results are shown in Table VIII, IX, and X, which represent three separate pre-treatment batches. Two control runs are included in each table (where the herbicide was applied alone). In each case, substantially more herbicide remains in the soil when an extender compound is present.

## TABLE VIII

2-DAY SOIL PERSISTENCE TESTS – RUN #1

Herbicide: S-Ethyl di-n-propylthiocarbamate

Application Rates: Herbicide 6 ppm (weight)
Extender 4 ppm (weight)

Herbicide alone: Trial A: 0.22 } Residue after 2 Days (ppm)
Trial B: 0.23 }

Herbicide with Extender: 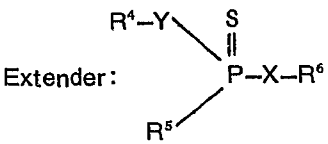

| Compound No. | $R^4$–Y– | $R^5$– | –X–$R^6$ | Herbicide Residue After 2 days (ppm) |
|---|---|---|---|---|
| 1 | $(CH_3)_2CHCH_2O$– | $(CH_3)_2CHCH_2O$– | $-SCH_2Cl$ | 3.05 |
| 2 | $CH_3O$– | $CH_3O$– | $-SCH_2CH(CN)_2$ | 3.25 |
| 3 | $CH_3OCH_2CH_2O$– | $C_2H_5S$– | $-OCH_2CH_2OCH_3$ | 3.73 |
| 4 | $C_2H_5O$– | $C_2H_5$– | $-OC_2H_5$ | 2.86 |
| 5 | $C_2H_5O$– | $C_2H_5O$– | 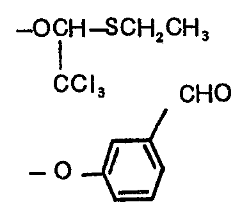 | 3.70 |
| 6 | $C_2H_5O$– | $C_2H_5O$– | | 3.70 |
| 7 | $C_2H_5O$– | $C_2H_5O$– | 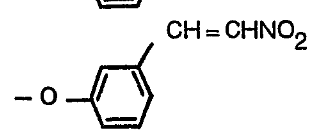 | 3.65 |

TABLE VIII (Continued)

| Compound No. | $R^4Y-$ | $R^5-$ | $-X-R^6$ | Herbicide Residue After 2 days (ppm) |
|---|---|---|---|---|
| 8 | $C_2H_5O-$ | $C_2H_5O-$ | 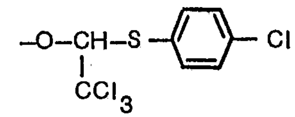 | 3.97 |
| 9 | $CH_3O-$ | $CH_3O-$ | $-S-n-C_7H_{15}$ | 3.83 |
| 10 | $C_2H_5O-$ | $C_2H_5O-$ | 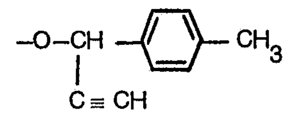 | 3.79 |
| 11 | 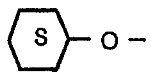 | $C_2H_5O-$ | 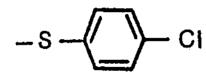 | 3.74 |
| 12 | $CH_3SCH_2S-$ | $C_2H_5-$ | 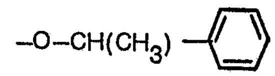 | 3.56 |
| 13 | $CH_3SCH_2S-$ | $C_2H_5-$ | 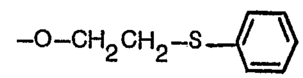 | 3.64 |
| 14 | $CH_3S-$ | $C_2H_5-$ | 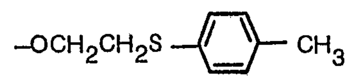 | 3.81 |
| 15 | $CH_3S-$ | $CH_3-$ | $-OCH_3$ | 3.25 |
| 16 | $C_2H_5O-$ | $C_2H_5-$ | $-OCH_3$ | 3.16 |

TABLE VIII (Continued)

| Compound No. | $R^4Y-$ | $R^5-$ | $-X-R^6$ | Herbicide Residue After 2 days (ppm) |
|---|---|---|---|---|
| 17 | $C_2H_5O-$ | $C_2H_5-$ | 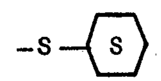 | 3.85 |
| 18 | $CH_2=CHCH_2S-$ | $C_2H_5-$ | 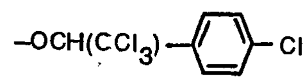 | 3.79 |
| 19 | $C_2H_5O-$ | $C_2H_5O-$ | 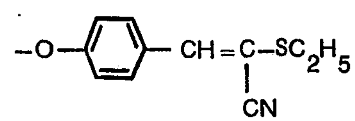 | 3.18 |
| 20 | $CH_3SCH_2S-$ | $C_2H_5-$ | 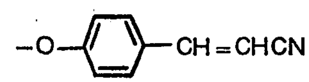 | 3.33 |

TABLE IX

2-DAY SOIL PERSISTENCE TESTS – RUN #2

Herbicide: S-ethyl di-n-propylthiocarbamate

Application Rates: Herbicide 6 ppm (weight)
Extender: 4 ppm (weight)

Herbicide Alone: Trial A: 1.42; Trial B: 1.23 — Residue After 2 Days (ppm)

Herbicide with Extender: 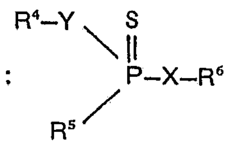

| Compound No. | $R^4$–Y– | $R^5$– | –X–$R^6$ | Herbicide Residue After 2 days (ppm) |
|---|---|---|---|---|
| 21 | $CH_2=C(CH_3)CH_2O-$ | $C_2H_5-$ | 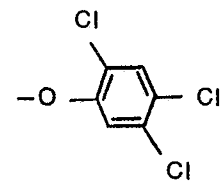 | 2.21 |
| 22 | $C_2H_5O-$ | $C_2H_5-$ | 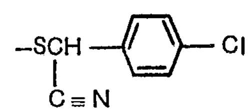 | 2.26 |
| 23 | $CH_3O-$ | $C_2H_5-$ | $-SCH_2C(SCH_3)_2CH_3$ | 2.26 |
| 24 | $CH_3O-$ | $CH_3O-$ | $-SCH_2C\equiv N$ | 2.46 |
| 25 | $N\equiv CCH_2S-$ | $C_2H_5-$ | 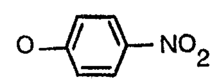 | 2.60 |
| 26 | $(CH_3)_3CS-$ | $C_2H_5-$ | $-SCH_2SC_2H_5$ | 2.67 |

TABLE IX (Continued)

| Compound No. | $R^4$–Y– | $R^5$– | X–$R^6$ | Herbicide Residue After 2 days (ppm) |
|---|---|---|---|---|
| 27 | $(CH_3)_3CS-$ | $C_2H_5-$ | $-SCH_2C\equiv CH$ | 3.72 |
| 28 | $CH\equiv CCH_2S-$ | $C_2H_5-$ | 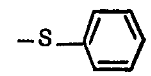 | 3.74 |
| 29 | $BrCH_2CH_2O-$ | $C_2H_5-$ | $-SCH_2C\equiv CH$ | 3.21 |
| 30 | $CH_3S-$ | $C_2H_5-$ | 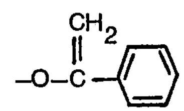 | 2.60 |
| 31 | $(CH_3)_2CHO-$ | $C_2H_5-$ | 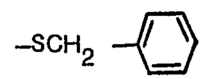 | 4.83 |
| 32 | $CH_2=CHCH_2O-$ | $C_2H_5-$ | 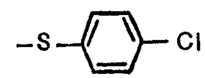 | 3.97 |
| 33 | $C_2H_5SCH_2S-$ | $C_2H_5-$ | 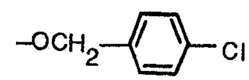 | 4.68 |
| 34 | $CH_3S-$ | $C_2H_5-$ | 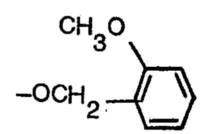 | 3.66 |
| 35 | $(ClCH_2)_2CHO-$ | $C_2H_5-$ | 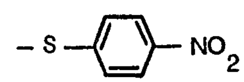 | 3.66 |

TABLE IX (Continued)

| Compound No. | $R^4$–Y– | $R^5$– | –X–$R^6$ | Herbicide Residue After 2 days (ppm) |
|---|---|---|---|---|
| 36 | $(ClCH_2)_2CHO-$ | $C_2H_5-$ | 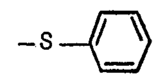 | 3.61 |
| 37 | $C_3H_7O-$ | $C_2H_5O-$ | 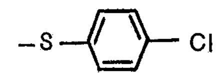 | 2.89 |
| 38 | 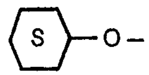 | $C_2H_5-$ | 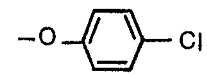 | 4.19 |
| 39 | 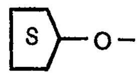 | $C_2H_5-$ | 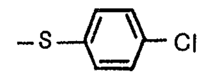 | 3.82 |
| 40 | $CH_3CH=CHCH_2O-$ | $C_2H_5-$ | 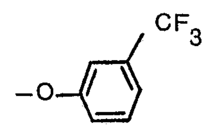 | 2.88 |
| 41 | $CH_2=CHCH_2O-$ | $CH_3-$ | 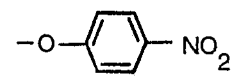 | 2.75 |
| 42 | $CH_2=CHCH_2O-$ | $CH_3-$ | 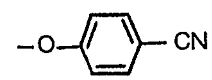 | 3.02 |
| 43 | $CH\equiv CCH_2S-$ | $C_2H_5-$ | $-OCH_2CH_2-NO_2$ | 2.28 |

TABLE IX (Continued)

| Compound No. | $R^4-Y-$ | $R^5-$ | $-X-R^6$ | Herbicide Residue After 2 days (ppm) |
|---|---|---|---|---|
| 44 | $CH_3S-$ | $C_2H_5-$ | 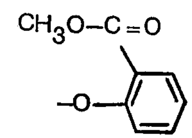 | 2.24 |
| 45 | $C_2H_5S-$ | $C_2H_5-$ | $-SC_2H_5$ | 2.13 |

TABLE X

2-DAY SOIL PERSISTENCE TESTS – RUN #3

Herbicide: S-Ethyl di-n-propylthiocarbamate
Application Rates: Herbicide 6 ppm (weight)
Extender 4 ppm (weight)

Herbicide Alone: Trial A: 0.13; Trial B: 0.11 } Residue After 2 days (ppm)

Herbicide with Extender: 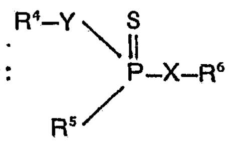

| Compound No. | $R^4-Y-$ | $R^5-$ | $-X-R^6$ | Herbicide Residue After 2 days (ppm) |
|---|---|---|---|---|
| 46 | $C_2H_5O-$ | $C_2H_5-$ | 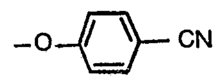 | 1.08 |
| 47 | $(CH_3)_2CHO-$ | $C_2H_5-$ | 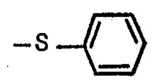 | 0.98 |
| 48 | $C_2H_5O-$ | $C_2H_5O-$ | 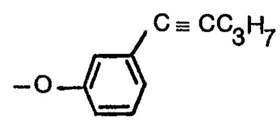 | 1.08 |
| 49 | $C_2H_5CH(CH_3)CH_2O-$ | $C_2H_5-$ | 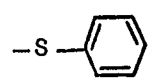 | 0.51 |
| 50 | $C_2H_5CH(CH_3)CH_2O-$ | $C_2H_5-$ | 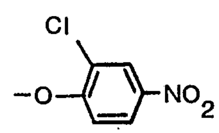 | 0.56 |

TABLE X (Continued)

| Compound No. | $R^4-Y-$ | $R^5-$ | $-X-R^6$ | Herbicide Residue After 2 days (ppm) |
|---|---|---|---|---|
| 51 | $C_2H_5O-$ | $C_2H_5-$ | $-SCH_2C(SCH_3)_2CH_3$ | 2.16 |
| 52 | $C_2H_5O-$ | $C_2H_5O-$ | $-SCH_2C(SCH_3)_2CH_3$ | 1.82 |
| 53 | $CH_3O-$ | $CH_3-$ | $-SCH_2C(SCH_3)_2CH_3$ | 0.69 |
| 54 | $(CH_3)_2CHCH_2CH_2O-$ | $C_2H_5-$ | 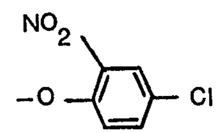 | 0.92 |

METHODS OF APPLICATION

The herbicidal compositions of the present invention are useful in controlling the growth of undesirable vegetation by pre-emergence or post-emergence application to the locus where control is desired, including pre-plant and post-plant soil incorporation as well as surface application. The compositions are generally embodied in formulations suitable for convenient application. Typical formulations contain additional ingredients or diluent carriers which are either inert or active. Examples of such ingredients or carriers are water, organic solvents, dust carriers, granular carriers, surface active agents, oil and water, water-oil emulsions, wetting agents, dispersing agents, and emulsifying agents. The herbicidal formulations generally take the form of dusts, emulsifiable concentrates, granules and pellets, or microcapsules.

A. DUSTS

Dusts are dense powder compositions which are intended for application in dry form. Dusts are characterized by their free-flowing and rapid settling properties so that they are not readily windborne to areas where their presence is not desired. They contain primarily an active material and a dense, free-flowing, solid carrier.

Their performance is sometimes aided by the inclusion of a wetting agent, and convenience in manufacture frequently demands the inclusion of an inert, absorptive grinding aid. For the dust compositions of this invention, the inert carrier may be either of vegetable or mineral origin, the wetting agent is preferably anionic or nonionic, and suitable absorptive grinding aids are of mineral origin.

Suitable classes of inert solid carriers for use in the dust compositions are those organic or inorganic powders which possess high bulk density and are very free-flowing. They are also characterized by low surface area and poor liquid absorptivity. Suitable grinding aids are natural clays, diatomaceous earths, and synthetic mineral fillers derived from silica or silicate. Among ionic and nonionic wetting agents, the most suitable are the members of the group known to the art as wetting agents and emulsifiers. Although solid agents are preferred because of ease in incorporation some liquid nonionic agents are also suitable in the dust formulations.

Preferred dust carriers are micaceous talcs, pyrophyllite, dense kaolin clays, tobacco dust and ground calcium phosphate rock.

Preferred grinding aids are attapulgite clay, diatomaceous silica, synthetic fine silica and synthetic calcium and magnesium silicates.

Most preferred wetting agents are alkylbenzene and alkylnaphthalene sulfonates, sulfated fatty alcohols, amines or acid amides, long chain acid esters of sodium isothionate, esters of sodium sulfosuccinate, sulfated or sulfonated fatty acid esters, petroleum sulfonates, sulfonated vegetable oils, and ditertiary acetylenic glycols. Preferred dispersants are methyl cellulose, polyvinyl alcohol, lignin sulfonates, polymeric alkylnaphthalene sulfonates, sodium naphthalenesulfonate, polymethylene bisnaphthalenesulfonate, and sodium-N-methyl-N-(long chain acid) taurates.

The inert solid carriers in the dusts of this invention are usually present in concentrations of from about 30 to 90 weight percent of the total composition. The grinding aid will usually constitute 5 to 50 weight percent of the compositions, and the wetting agent will constitute from about 0 to 1.0 weight percent of the composition. Dust compositions can also contain other surfactants such as dispersing agents in concentrations of up to about 0.5 weight percent, and minor amounts of anticaking and antistatic agents. The particle size of the carrier is usually in the range of 30 to 50 $\mu$m.

B. EMULSIFIABLE CONCENTRATES

Emulsifiable concentrates are usually solutions of the active materials in nonwater-miscible solvents together with an emulsifying agent. Prior to use, the concentrate is diluted with water to form a suspended emulsion of solvent droplets.

Typical solvents for use in emulsifiable concentrates include weed oils, chlorinated hydrocarbons, and nonwater-miscible ethers, esters, and ketones.

Typical emulsifying agents are anionic or nonionic surfactants, or mixtures of the two. Examples include long-chain alkyl or mercaptan polyethoxy alcohols, alkylaryl polyethoxy alcohols, sorbitan fatty acid esters, polyoxyethylene ethers with sorbitan fatty acid esters, polyoxyethylene glycol esters with fatty or rosin acids, fatty alkylol amide condensates, calcium and amine salts of fatty alcohol sulfates, oil soluble petroleum sulfonates or, preferably, mixtures of these emulsifying agents. Such emulsifying agents will comprise from about 1 to 10 weight percent of the total composition.

Thus, emulsifiable concentrates of the present invention will consist of from about 15 to about 50 weight percent active material, about 40 to 82 weight percent solvent, and about 1 to 10 weight percent emulsifier. Other additives such as spreading agents and stickers can also be included.

C. GRANULES AND PELLETS

Granules and pellets are physically stable, particulate compositions containing the active ingredients adhering to or distributed through a basic matrix of a coherent, inert carrier with macroscopic dimensions. A typical particle is about 1 to 2 millimeters in diameter. Surfactants are often present to aid in leaching of the active ingredients from the granule or pellet.

The carrier is preferably of mineral origin, and generally falls within one of two types. The first are porous, absorptive, preformed granules, such as preformed and screened granular attapulgite or heat expanded, granular, screened vermiculite. On either of these, a solution of the active agent can be sprayed and will be absorbed at concentrations of up to 25 weight percent of the total weight. The second, which are also suitable for pellets, are initially powdered kaolin clays, hydrated attapulgite, or bentonite clays in the form of sodium, calcium or magnesium bentonites. Water-soluble salts, such as sodium salts, may also be present to aid in the disintegration of granules or pellets in the presence of moisture. These ingredients are blended with the active components to give mixtures that are granulated or pelleted, followed by drying, to yield formulations with the active component distributed uniformly throughout the mass. Such granules and pellets can also be made with 25 to 30 weight percent active component, but more frequently a concentration of about 10 weight percent is desired for optimum distribution. The granular compositions of this invention are most useful in a size range of 15—30 mesh (1.30—0.59 mm in diameter).

The surfactant is generally a common wetting agent of anionic or nonionic character. The most suitable wetting agents depend upon the type of granule used. When preformed granules are sprayed with active material in liquid form the most suitable wetting agents are nonionic, liquid wetters miscible with the solvent. These are compounds more generally known to the art as emulsifiers, and comprise alkylaryl polyether alcohols, alkyl polyether alcohols, polyoxyethylene sorbitan fatty acid esters, polyethylene glycol esters with fatty or rosin acids, fatty alkylol amide condensates, oil solution petroleum or vegetable oil sulfonates, or mixtures of these. Such agents will usually comprise up to about 5 weight percent of the total composition.

When the active ingredient is first mixed with a powdered carrier and subsequently granulated, or pelleted, liquid nonionic wetters can still be used, but it is usually preferable to incorporate at the mixing stage one of the solid, powdered anionic wetting agents such as those previously listed for the wettable powders. Such agents will comprise from about 0 to 2 weight percent of the total composition.

Thus, the preferred granular or pelleted formulations of this invention comprise about 5 to 30 weight percent active material, about 0 to 5 weight percent wetting agent, and about 65 to 95 weight percent inert material carrier, as these terms are used herein.

D. MICROCAPSULES

Microcapsules consist of fully enclosed droplets or granules containing the active materials, in which the enclosing material is an inert porous membrane, arranged to allow escape of the enclosed materials to the surrounding medium at controlled rates over a specified period. Microcapsules are particularly useful in the present invention since the organophosphorus compounds of the herbicide composition are liquid.

Encapsulated droplets are typically about 1 to 50 μm in diameter. The enclosed liquid typically constitutes about 50 to 95% of the weight of the entire capsule, and may contain a small amount of solvent in addition to the active materials.

Encapsulated granules are characterized by porous membranes sealing the openings of the granule carrier pores, trapping the liquid containing the active components inside for controlled release. A typical granule size ranges from 1 millimeter to 1 centimeter in diameter. In agricultural usage, the granule size is generally about 1 to 2 millimeters in diameter. Granules formed by extrusion, agglomeration, or prilling are useful in the present invention as well as materials in their naturally occurring form. Examples of such carriers are vermiculite, sintered clay granules, kaolin, attapulgite clay, sawdust, and granular carbon.

Useful encapsulating materials include natural and synthetic rubbers, cellulosic materials, styrenebutadiene copolymers, polyacrylonitriles, polyacrylates, polyesters, polyamides, polyurethanes, and starch xanthates.

E. IN GENERAL

Each of the above formulations can be prepared as a package containing both the thiocarbamate herbicide and the organophosphorus extender together with the other ingredients of the formulation (diluents, emulsifiers, surfactants, etc.). The formulations can also be prepared by a tank mix method, in which the ingredients are obtained separately and combined at the grower site. The herbicide and extender may both be used in the same type of formulation or a different formulation may be used for each, e.g., the herbicide may be in microcapsule form while the extender may be an emulsifiable concentrate, or vice versa.

As a further alternative, the herbicide and extender can be applied sequentially, with either being applied first. This is a less preferred method, however, since more effective results are obtained with simultaneous application.

In general, any conventional method of application can be used. The locus of application can be soil, seeds, seedlings, or the actual plants, as well as flooded fields. Soil application is preferred. Dusts and liquid compositions can be applied by the use of powder dusters, boom and hand sprayers and spray dusters. The compositions can also be applied from airplanes as dusts or sprays because they are

effective in very low dosages. In order to modify or control the growth of germinating seeds or emerging seedlings, as a typical example, the dust and liquid compositions are applied to the soil according to conventional methods and are distributed in the soil to a depth of at least one-half inch below the soil surface. It is not necessary that the phytotoxic compositions be admixed with the soil particles. Instead, these compositions can be applied merely by spraying or sprinkling the surface of the soil. The phytotoxic compositions of this invention can also be applied by addition to irrigation water supplied to the field to be treated. This method of application permits the penetration of the compositions into the soil as the water is absorbed therein. Dust compositions, granular compositions or liquid formulations applied to the surface of the soil can be distributed below the surface of the soil by conventional means such as discing, dragging or mixing operations.

The herbicide/extender compositions can also be applied to the soil through irrigation systems. According to this technique, the compositions are added directly to irrigation water immediately prior to irrigation of the field. This technique is applicable in all geographical areas regardless of rainfall, since it permits supplementation of the natural rainfall at critical stages of plant growth. In a typical application, the concentration of the herbicide/extender composition in the irrigation water will range from about 10 to 150 parts per million by weight. The irrigation water can be applied by the use of sprinkler systems, surface furrows, or flooding. Such application is most effectively done before the weeds germinate, either early in the spring prior to germination or within two days after cultivation of the field.

The compositions of this invention can also contain further additaments, such as fertilizers, insecticides, or other herbicides. Suitable pesticides include 2,4-dichlorophenoxyacetic acids, 2,4,5-trichlorophenoxy acetic acid, 2-methyl-4-chlorophenoxyacetic acid, and the salts, esters and amides thereof; triazine deri atives, such as 2,4-bis-(3-methoxypropylamino)-6-methyl-thio-s-triazine; 2-chloro-4-ethylamino-6-isopropylamino-s-triazine; 2-ethylamino-4-isopropylamino-6-methylmercapto-s-triazine; urea derivatives such as 3-(3,4-dichlorophenyl)-1,1-dimethyl urea; acetamides such as N,N-diallyl-$\alpha$-chloroacetamide, N-($\alpha$-chloroacetyl) hexamethyleneimine, and N,N-diethyl-$\alpha$-bromoacetamide; and benzoic acids such as 3-amino-2,5-dichlorobenzoic acid. Fertilizers useful in combination with the active ingredients include ammonium nitrate, urea, and superphosphate. Other useful additaments include materials in which plant organisms take root and grow, such as compost, manure, humus, sand and the like.

The amount of composition of the present invention which constitutes a herbicidally effective amount depends upon the nature of the seeds or plants to be controlled. The rate of application of active ingredient varies from about 0.01 to about 50 pounds per acre, preferably about 0.11 to about 28 kg/ha with the actual amount used depending on the overall cost and the desired results. It will be readily apparent to one skilled in the art that compositions exhibiting lower herbicidal activity will require a higher dosage rate for the same degree of control than more active compounds.

## Claims

1. An herbicidal composition comprising
(a) an herbicidally effective amount of a thiocarbamate having the formula

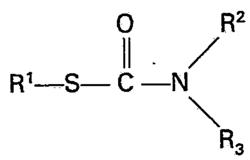

in which
$R^1$ is $C_1$—$C_6$ alkyl, optionally substituted with one, two or three halogen atoms, and
$R^2$ and $R^3$ are independently $C_1$—$C_6$ alkyl;
and
(b) an amount of an organophosphorus compound having the formula

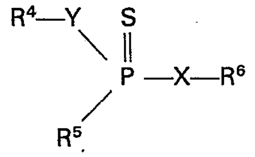

in which
$R^4$ is $C_1$—$C_6$ alkyl, $C_3$—$C_6$ alkenyl, $C_3$—$C_6$ alkynyl, or $C_5$—$C_7$ cycloalkyl, and is optionally substituted with one or more members selected from halo, cyano, $C_1$—$C_3$ alkoxy, and $C_1$—$C_3$ alkylthio,
$R^5$ is $C_1$—$C_4$ alkyl, $C_1$—$C_4$ alkoxy, or $C_1$—$C_4$ alkylthio,
$R^6$ is $C_1$—$C_{10}$ alkyl, $C_2$—$C_{10}$ alkenyl, or $C_2$—$C_4$ alkynyl, optionally substituted with one or more

members selected from halo, nitro, cyano, $C_1$—$C_3$ alkoxy, and $C_1$—$C_3$ alkylthio, $C_5$—$C_7$ cycloalkyl, or —$(R^7)_m$—$\varphi$ in which

$R^7$ is $C_1$—$C_4$ alkyl, $C_2$—$C_4$ alkenyl, or $C_2$—$C_4$ alkynyl, optionally substituted with one or more members selected from halo and cyano,

m is zero or one, and

$\varphi$ is phenyl optionally substituted with one or more members selected from halo, trifluoromethyl, nitro, cyano, $C_1$—$C_3$ alkoxy, $C_1$—$C_3$ carbalkoxy, and $C_1$—$C_3$ alkylsulfinyl;

X is oxygen or sulfur, and

Y is oxygen or sulfur,

sufficient to extend the soil life of said thiocarbamate.

2. An herbicidal composition comprising

(a) an herbicidally effective amount of a thiocarbamate having the formula

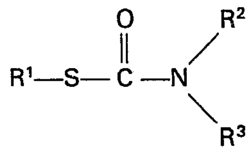

in which

$R^1$ is $C_1$—$C_6$ alkyl, optionally substituted with one, two, or three halogen atoms, and

$R^2$ and $R^3$ are independently $C_1$—$C_6$ alkyl;

and

(b) an amount of an organophosphorus compound having the formula

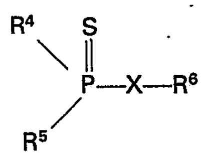

in which

$R^4$ is $C_1$—$C_6$ alkyl,

$R^5$ is $C_1$—$C_4$ alkyl, $C_1$—$C_4$ alkoxy, or $C_1$—$C_4$ alkylthio,

$R^6$ is phenyl, chlorophenyl, nitrophenyl, $C_7$—$C_9$ alkylsulfinylphenyl, $C_7$—$C_9$ phenylalkyl, or $C_2$—$C_6$ alkylthioalkyl, and

X is oxygen or sulfur,

sufficient to extend the soil life of said thiocarbamate.

3. An herbicidal composition comprising

(a) an herbicidally effective amount of a thiocarbamate having the formula

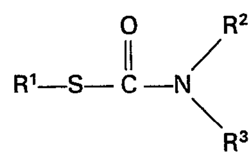

in which

$R^1$ is $C_1$—$C_6$ alkyl, optionally substituted with one, two, or three halogen atoms, and

$R^2$ and $R^3$ are independently $C_1$—$C_6$ alkyl;

and

(b) an amount of O,O-diethyl-O-phenyl phosphorothioate sufficient to extend the soil life of said thiocarbamate.

4. An herbicidal composition comprising

(a) S-ethyl di-n-propylthiocarbamate and

(b) an amount of O,O-diethyl-O-phenyl phosphorothioate sufficient to extend the soil life of said thiocarbamate.

5. An herbicidal composition comprising

(a) S-ethyl diisobutylthiocarbamate and

(b) an amount of O,O-diethyl-O-phenyl phosphorothioate sufficient to extend the soil life of said thiocarbamate.

6. A composition according to Claims 1, 2, 3, 4, or 5 in which the weight ratio of said thiocarbamate to said organophosphorus compound ranges from 0.1:1 to 50:1.

7. A composition according to Claims 1, 2, 3, 4, or 5 in which the weight ratio of said

thiocarbamate to said organophosphorus compound ranges from 1:1 to 15:1.

8. A composition according to Claims 1, 2, 3, 4, or 5 further comprising a non-phytotoxic antidotally effective amount of a compound having the formula

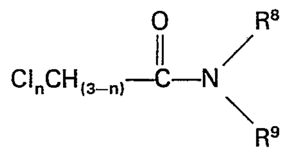

in which n is 1 or 2, and $R^8$ and $R^9$ are independently $C_1$—$C_{12}$ alkyl or $C_2$—$C_{12}$ alkenyl, or

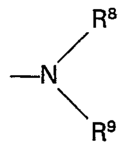

represents the group

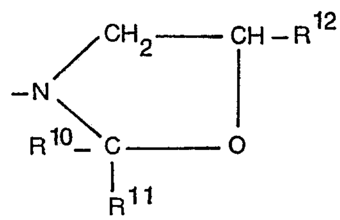

in which $R^{10}$ and $R^{11}$ are independently selected from the group consisting of hydrogen and methyl, and $R^{12}$ is selected from the group consisting of hydrogen, $C_1$—$C_4$ alkyl, and phenyl.

9. A composition according to Claims 1, 2, 3, 4, or 5 further comprising a nonphytotoxic antidotally effective amount of N,N-diallyl dichloroacetamide.

10. A method of controlling undesirable vegetation comprising applying to the locus where control is desired both

(a) an herbicidally effective amount of a thiocarbamate having the formula

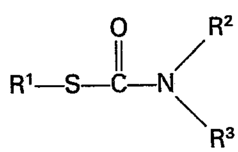

in which

$R^1$ is $C_1$—$C_6$ alkyl, $C_3$—$C_6$ alkenyl, $C_7$—$C_9$ phenylalkyl, or phenyl, and is optionally substituted with one, two, or three halogen atoms, and

$R^2$ and $R^3$ are either selected independently from $C_1$—$C_6$ alkyl and $C_5$—$C_7$ cycloalkyl, or combined to conjointly form $C_4$—$C_7$ alkylene;

and

(b) an amount of an organophosphorus compound having the formula

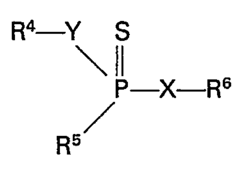

in which

$R^4$ is $C_1$—$C_6$ alkyl, $C_3$—$C_6$ alkenyl, $C_3$—$C_6$ alkynyl, or $C_5$—$C_7$ cycloalkyl, and is optionally substituted with one or more members selected from halo, cyano, $C_1$—$C_3$ alkoxy, and $C_1$—$C_3$ alkylthio,

$R^5$ is $C_1$—$C_4$ alkyl, $C_1$—$C_4$ alkoxy, or $C_1$—$C_4$ alkylthio,

$R^6$ is $C_1$—$C_{10}$ alkyl, $C_2$—$C_{10}$ alkenyl, or $C_2$—$C_4$ alkynyl, optionally substituted with one or more members selected from halo, nitro, cyano, $C_1$—$C_3$ alkoxy, and $C_1$—$C_3$ alkylthio, $C_5$—$C_7$ cycloalkyl, or —$(R^7)_m$—$\varphi$ in which

$R^7$ is $C_1$—$C_4$ alkyl, $C_2$—$C_4$ alkenyl, or $C_2$—$C_4$ alkynyl, optionally substituted with one or more members selected from halo and cyano,

m is zero or one, and

φ is phenyl optionally substituted with one or more members selected from halo, trifluoromethyl, nitro, cyano, $C_1$—$C_3$ alkoxy, $C_1$—$C_3$ carbalkoxy, and $C_1$—$C_3$ alkylsulfinyl;

X is oxygen or sulfur, and

Y is oxygen or sulfur,

sufficient to extend the soil life of said thiocarbamate, provided that said organophosphorus compound is not O,O-diethyl-S-ethylthioethyl-phosphorodithioate.

11. A method of controlling undesirable vegetation comprising applying to the locus where control is desired both

(a) an herbicidally effective amount of a thiocarbamate having the formula

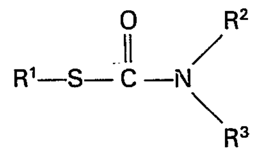

in which

$R^1$ is $C_1$—$C_6$ alkyl, $C_3$—$C_6$ alkenyl, $C_7$—$C_9$ phenylalkyl, or phenyl, and is optionally substituted with one, two, or three halogen atoms, and

$R^2$ and $R^3$ are either selected independently from $C_1$—$C_6$ alkyl and $C_5$—$C_7$ cycloalkyl, or combined to conjointly form $C_4$—$C_7$ alkylene;

and

(b) an amount of an organosphosphorus compound having the formula

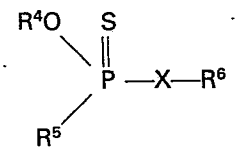

in which

$R^4$ is $C_1$—$C_4$ alkyl,

$R^5$ is $C_1$—$C_4$ alkyl, $C_1$—$C_4$ alkoxy, or $C_1$—$C_4$ alkylthio,

$R^6$ is phenyl, chlorophenyl, nitrophenyl, $C_7$—$C_9$ alkylsulfinylphenyl, $C_7$—$C_9$ phenylalkyl, or $C_2$—$C_6$ alkylthioalkyl, and

X is oxygen or sulfur,

sufficient to extend the soil life of said thiocarbamate, provided that said organophosphorus compound is not O,O-diethyl-S-ethylthioethyl-phosphorodithioate.

12. A method of controlling undesirable vegetation comprising applying to the locus where control is desired both

(a) an herbicidally effective amount of a thiocarbamate of the formula

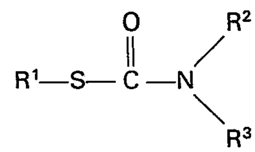

in which

$R^1$ is $C_1$—$C_6$ alkyl, $C_3$—$C_6$ alkenyl, $C_7$—$C_9$ phenylalkyl, or phenyl, and is optionally substituted with one, two, or three halogen atoms, and

$R^2$ and $R^3$ are either selected independently from $C_1$—$C_6$ and $C_5$—$C_7$ cycloalkyl, or combined to conjointly form $C_4$—$C_7$ alkylene;

and

(b) an amount of O,O-diethyl-O-phenyl phosphorothioate sufficient to extend the soil life of said thiocarbamate.

13. A method of controlling undesirable vegetation comprising applying to the locus where control is desired both

(a) S-ethyl di-n-propylthiocarbamate and

(b) an amount of O,O-diethyl-O-phenyl phosphorothioate sufficient to extend the soil life of said thiocarbamate.

14. A method of controlling undesirable vegetation comprising applying to the locus where control is desired both

(a) S-ethyl diisobutylthiocarbamate and

(b) an amount of O,O-diethyl-O-phenyl phosphorothioate sufficient to extend the soil life of said thiocarbamate.

15. A method according to Claims 10, 11, 12, 13, or 14 in which the weight ratio of said thiocarbamate to said organophosphorus compound ranges from 0.1:1 to 50:1.

16. A method according to Claims 10, 11, 12, 13, or 14 in which the weight ratio of said thiocarbamate to said organophosphorus compound ranges from 1:1 to 15:1.

17. A method according to Claims 10, 11, 12, 13, or 14 comprising further applying a nonphytotoxic antidotally effective amount of a compound having the formula

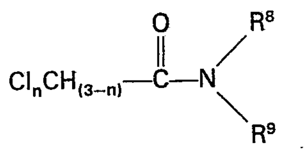

in which n is 1 or 2, and $R^8$ and $R^9$ are independently $C_1$—$C_{12}$ alkyl or $C_2$—$C_{12}$ alkenyl, or

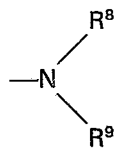

represents the group

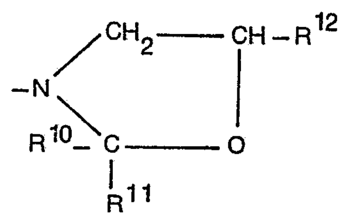

in which $R^{10}$ and $R^{11}$ are independently selected from the group consisting of hydrogen and methyl, and $R^{12}$ is selected from the group consisting of hydrogen, $C_1$—$C_4$ alkyl, and phenyl.

18. A method according to Claims 10, 11, 12, 13, or 14 comprising further applying a nonphytotoxic antidotally effective amount of N,N-diallyl dichloroacetamide.

19. A method of extending the soil life of a thiocarbamate having the formula

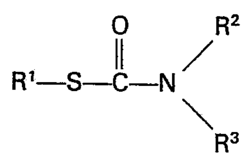

in which

$R^1$ is $C_1$—$C_6$ alkyl, $C_3$—$C_6$ alkenyl, $C_7$—$C_9$ phenylalkyl, or phenyl, and is optionally substituted with one, two, or three halogen atoms, and

$R^2$ and $R^3$ are either selected independently from $C_1$—$C_6$ alkyl and $C_5$—$C_7$ cycloalkyl, or combined to conjointly form $C_4$—$C_7$ alkylene;

which comprises applying to the soil containing previously applied said thiocarbamate or to which said thiocarbamate is to be later applied an effective amount of an organophosphorus compound having the formula

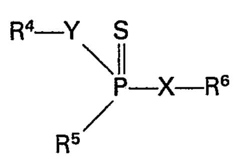

$R^4$ is $C_1$—$C_6$ alkyl, $C_3$—$C_6$ alkenyl, $C_3$—$C_6$ alkynyl, or $C_5$—$C_7$ cycloalkyl, and is optionally substituted with one or more members selected from halo, cyano, $C_1$—$C_3$ alkoxy, and $C_1$—$C_3$ alkylthio,

$R^5$ is $C_1$—$C_4$ alkyl, $C_1$—$C_4$ alkoxy, or $C_1$—$C_4$ alkylthio,

$R^6$ is $C_1$—$C_{10}$ alkyl, $C_2$—$C_{10}$ alkenyl, or $C_2$—$C_4$ alkynyl, optionally substituted with one or more members selected from halo, nitro, cyano, $C_1$—$C_3$ alkoxy and $C_1$—$C_3$ alkylthio, $C_5$—$C_7$ cycloalkyl, or —$(R^7)_m$—$\varphi$ in which

$R^7$ is $C_1$—$C_4$ alkyl, $C_2$—$C_4$ alkenyl, or $C_2$—$C_4$ alkynyl, optionally substituted with one or more members selected from halo and cyano,

m is zero or one, and

$\varphi$ is phenyl optionally substituted with one or more members selected from halo, trifluoromethyl, nitro, cyano, $C_1$—$C_3$ alkoxy, $C_1$—$C_3$ carbalkoxy, and $C_1$—$C_3$ alkylsulfinyl,

X is oxygen or sulfur, and

Y is oxygen or sulfur.

20. A method of extending the soil life of a thiocarbamate having the formula

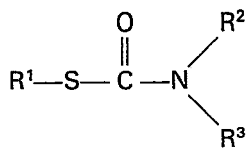

in which

$R^1$ is $C_1$—$C_6$ alkyl, $C_3$—$C_6$ alkenyl, $C_7$—$C_9$ phenylalkyl, or phenyl, and is optionally substituted with one, two, or three halogen atoms, and

$R^2$ and $R^3$ are either selected independently from $C_1$—$C_6$ alkyl and $C_5$—$C_7$ cycloalkyl, or combined to conjointly form $C_4$—$C_7$ alkylene;

which comprises applying to the soil containing said thiocarbamate or to which said thiocarbamate is to be applied an effective amount of an organophosphorus compound having the formula

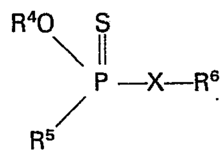

in which

$R^4$ is $C_1$—$C_4$ alkyl,

$R^5$ is $C_1$—$C_4$ alkyl, $C_1$—$C_4$ alkoxy, or $C_1$—$C_4$ alkylthio,

$R^6$ is phenyl, chlorophenyl, nitrophenyl, $C_7$—$C_9$ alkylsulfinylphenyl, $C_7$—$C_9$ phenylalkyl, or $C_2$—$C_6$ alkylthioalkyl, and

X is oxygen or sulfur.

21. A method of extending the soil life of a thiocarbamate having the formula

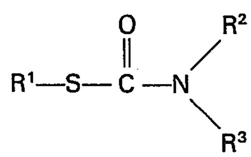

in which

$R^1$ is $C_1$—$C_6$ alkyl, $C_3$—$C_6$ alkenyl, $C_7$—$C_9$ phenylalkyl, or phenyl, and is optionally substituted with one, two, or three halogen atoms, and

$R^2$ and $R^3$ are either selected independently from $C_1$—$C_6$ alkyl and $C_5$—$C_7$ cycloalkyl, or combined to conjointly form $C_4$—$C_7$ alkylene;

which comprises applying to the soil containing said thiocarbamate or to which said thiocarbamate is to be applied an effective amount of O,O-diethyll-O-phenyl phosphorothioate.

22. A method of extending the soil life of S-ethyl di-n-propylthiocarbamate which comprises applying to the soil containing said thiocarbamate or to which said thiocarbamate is to be applied an effective amount of O,O-diethyl-O-phenyl phosphorothioate.

23. A method of extending the soil life of S-ethyl diisobutylthiocarbamate which comprises applying to the soil containing said thiocarbamate or to which said thiocarbamate is to be applied an effective amount of O,O-diethyl-O-phenyl phosphorothioate.

24. A method according to Claims 19, 20, 21, 22, or 23 in which the weight ratio of said thiocarbamate to said organophosphorus compound ranges from 0.1:1 to 50:1.

25. A method according to Claims 19, 20, 21, 22, or 23 in which the weight ratio of said thiocarbamate to said organophosphorus compound ranges from 1:1 to 15:1.

26. A method according to Claims 19, 20, 21, 22, or 23 comprising further applying a nonphytotoxic antidotally effective amount of a compound having the formula

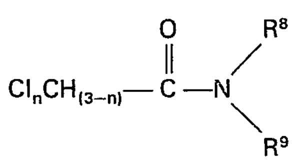

in which n is 1 or 2, and $R^8$ and $R^9$ are independently $C_1$—$C_{12}$ alkyl or $C_2$—$C_{12}$ alkenyl, or

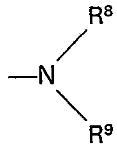

represents the group

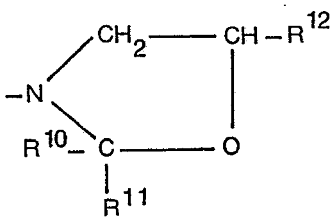

in which $R^{10}$ and $R^{11}$ are independently selected from the group consisting of hydrogen and methyl, and $R^{12}$ is selected from the group consisting of hydrogen, $C_1$—$C_4$ alkyl, and phenyl.

27. A method according to Claims 19, 20, 21, 22, or 23 comprising further applying a nonphytotoxic antidotally effective amount of N,N-diallyl dichloroacetamide.

**Revendications**

1. Composition herbicide comprenant:

— (a) une quantité efficace du point de vue herbicide d'un thiocarbamate présentant la formule:

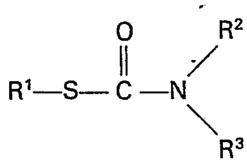

dans laquelle:

$R^1$ est un radical alkyle comprenant 1 à 6 atomes de carbone éventuellement substitué par un, deux ou trois atomes d'halogène, et

$R^2$ et $R^3$ sont, indépendamment l'un de l'autre, des radicaux alkyles comprenant 1 à 6 atomes de carbone;

— (b) une quantité d'un composé organophosphoré présentant la formule:

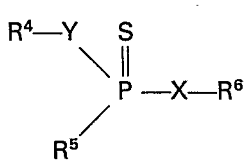

dans laquelle:

$R^4$ est un radical alkyle comprenant 1 à 6 atomes de carbone, alkényle comprenant 3 à 6 atomes de carbone, alkynyle comprenant 3 à 6 atomes de carbone, ou cycloalkyle comprenant 5 à 7 atomes de carbone, et est éventuellement substitué par un ou plusieurs radicaux consistant en radicaux halo, cyano, alkoxy comprenant 1 à 3 atomes de carbone, et alkylthio comprenant 1 à 3 atomes de carbone,

$R^5$ est un radical alkyle comprenant 1 à 4 atomes de carbone, alkoxy comprenant 1 à 4 atomes de carbone, ou alkylthio comprenant 1 à 4 atomes de carbone,

$R^6$ est un radical alkyle comprenant 1 à 10 atomes de carbone, alkényle comprenant 2 à 10 atomes de carbone, ou alkynyle comprenant 2 à 4 atomes de carbone, éventuellement substitué par un ou plusieurs radicaux consistant en halo, nitro, cyano, alkoxy comprenant 1 à 3 atomes de carbone, et alkylthio comprenant 1 à 3 atomes de carbone, cycloalkyle comprenant 5 à 7 atomes de carbone, ou le groupe —$(R^7)_m$—Φ dans lequel:

$R^7$ est un radical alkyle comprenant 1 à 4 atomes de carbone, alkényle comprenant 2 à 4 atomes de carbone, ou alkynyle comprenant 2 à 4 atomes de carbone, éventuellement substitué par un ou plusieurs radicaux consistant en halo et cyano,

m est égal à zero ou un, et

Φ est un radical phényle éventuellement substitué par un plusieurs radicaux consistant en radicaux halo, trifluorométhyle, nitro, cyano, alkoxy comprenant 1 à 3 atomes de carbone, carbalkoxy comprenant 1 à 3 atomes de carbone, et alkylsulfinyle comprenant 1 à 3 atomes de carbone,

X est un atome d'oxygène ou de soufre, et

Y est un atome d'oxygène ou de soufre,

cette quantité étant suffisante pour augmenter la durée de vie dans le sol dudit thiocarbamate.

2. Composition herbicide consistant en:

— (a) une quantité efficace du point de vue herbicide d'un thiocarbamate présentant la formule:

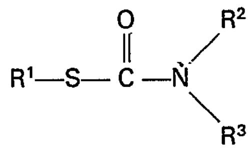

dans laquelle:

$R^1$ est un radical alkyle comprenant 1 à 6 atomes de carbone, éventuellement substitué par un, deux ou trois atomes d'halogène, et

$R^2$ et $R^3$ sont, indépendamment l'un de l'autre, des radicaux alkyles, comprenant 1 à 6 atomes de carbone;

et

— (b) une quantité d'un composé organosphosphoré présentant la formule:

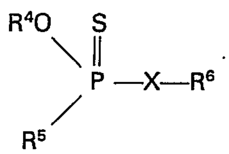

dans laquelle:

$R^4$ est un radical alkyle comprenant 1 à 4 atomes de carbone,

$R^5$ est un radical alkyle comprenant 1 à 4 atomes de carbone, alkoxy comprenant 1 à 4 atomes de carbone, ou alkylthio comprenant 1 à 4 atomes de carbone,

$R^6$ est un radical phényle, chlorophényle, nitrophényle, alkylsulfinylphényle comprenant 7 à 9 atomes de carbone, phénylalkyle comprenant 7 à 9 atomes de carbone, ou alkylthioalkyle comprenant 2 à 6 atomes de carbone, et

X est un atome d'oxygène ou de soufre,

cette quantité étant suffisante pour augmenter la durée de vie dans le sol du thiocarbamate.

3. Composition herbicide consistant en:

— (a) une quantité efficace du point de vue herbicide d'un thiocarbamate présentant la formule:

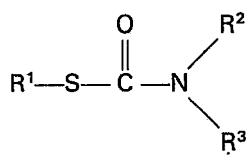

dans laquelle:

$R^1$ est un radical alkyle comprenant 1 à 6 atomes de carbone, éventuellement substitué par un, deux ou trois atomes d'halogène, et

$R^2$ et $R^3$ sont, indépendamment l'un de l'autre, des radicaux alkyles comprenant 1 à 6 atomes de carbone;

et

— (b) une quantité d'O,O-diéthyl-O-phényl phosphorothioate suffisante pour prolonger la durée de vie dans le sol du thiocarbamate.

4. Composition herbicide consistant en:

— (a) S-éthyl di-n-propylthiocarbamate, et

— (b) une quantité d'O,O-diéthyl-O-phényl phosphorothioate suffisante pour prolonger la durée de vie dans le sol du thiocarbamate.

5. Composition herbicide consistant en:

— (a) S-éthyl diisobutylthiocarbamate; et

— (b) une quantité d'O,O-diéthyl-O-phényl phosphorothioate suffisante pour prolonger la durée de vie dans le sol du thiocarbamate.

6. Composition selon l'une quelconque des revendications 1 à 5, caractérisée en ce que le rapport pondéral thiocarbamate/composé organophosphoré est compris entre 0,1/1 et 50/1.

7. Composition selon l'une quelconque des revendications 1 à 5, caractérisée en ce que le rapport

pondéral thiocarbamate/composé organosphosphoré est compris entre 1/1 et 15/1.

8. Composition selon l'une quelconque des revendications 1 à 5, caractérisée en ce qu'elle comprend en outre une quantité efficace du point de vue antidote et non-phytotoxic d'un composé présentant la formule:

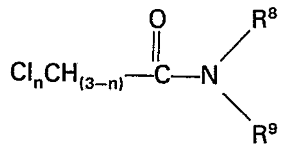

dans laquelle:

n est égal à 1 ou 2, et

$R^8$ et $R^9$ sont, indépendamment l'un de l'autre, un radical alkyle comprenant 1 à 12 atomes de carbone, ou alkényle comprenant 2 à 12 atomes de carbone, ou

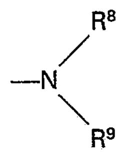

représente le groupe:

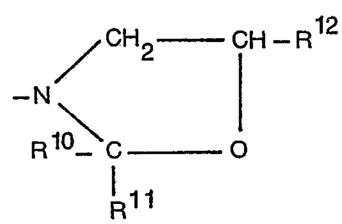

dans lequel:

$R^{10}$ et $R^{11}$, indépendamment l'un de l'autre, sont choisis dans le groupe comprenant l'atome d'hydrogène et le radical méthyle, et

$R^{12}$ est choisis dans le groupe consistant en hydrogène, alkyle comprenant 1 à 4 atomes de carbone, et phényle.

9. Composition selon l'une quelconque des revendications 1 à 5, caractérisée en ce qu'elle comprend en outre une quantité efficace du point de vue antidote et non-phytotoxique de N,N-diallyl dichloroacétamide.

10. Procédé pour contrôler la végétation indésirable, consistant à appliquer au lieu où le contrôle est recherché, à la fois:

— (a) une quantité efficace du point de vue herbicide d'un thiocarbamate présentant la formule:

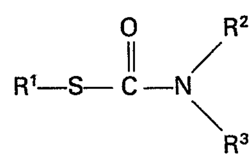

dans laquelle:

$R^1$ est un radical alkyle comprenant 1 à 6 atomes de carbone, alkényle comprenant 3 à 6 atomes de carbone, phénylalkyle comprenant 7 à 9 atomes de carbone, ou phényle, et est éventuellement substitué par un, deux ou trois atomes d'halogène,

$R^2$ et $R^3$ sont, indépendamment l'un de l'autre, un radical alkyle comprenant 1 à 6 atomes de carbone, et cycloalkyle comprenant 5 à 7 atomes de carbone, ou combinés pour former conjointement un radical alkylene comprenant 4 à 7 atomes de carbone;

et

— (b) une quantité d'un composé organophosphoré présentant la formule:

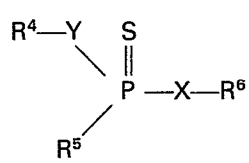

dans laquelle:

$R^4$ est un radical alkyle comprenant 1 à 6 atomes de carbone, alkényle comprenant 3 à 6 atomes de carbone, alkynyle comprenant 3 à 6 atomes de carbone, ou cycloalkyle comprenant 5 à 7 atomes de

carbone, et est éventuellement substitué par un ou plusieurs radicaux consistant en radicaux halo, cyano, alkoxy comprenant 1 à 3 atomes de carbone, et alkylthio comprenant 1 à 3 atomes de carbone,

$R^5$ est un radical alkyle comprenant 1 à 4 atomes de carbone, alkoxy comprenant 1 à 4 atomes de carbone, ou alkylthio comprenant 1 à 4 atomes de carbone,

$R^6$ est un radical alkyle comprenant 1 à 10 atomes de carbone, alkényle comprenant 2 à 10 atomes de carbone, ou alkynyle comprenant 2 à 4 atomes de carbone, éventuellement substitué par un ou plusieurs radicaux consistant en halo, nitro, cyano, alkoxy comprenant 1 à 3 atomes de carbone, et alkylthio comprenant 1 à 3 atomes de carbone, cycloalkyle comprenant 5 à 7 atomes de carbone, ou le groupe $-(R^7)_m-\Phi$ dans lequel:

$R^7$ est un radical alkyle comprenant 1 à 4 atomes de carbone, alkényle comprenant 2 à 4 atomes de carbone, ou alkynyle comprenant 2 à 4 atomes de carbone, éventuellement substitué par un ou plusieurs radicaux consistant en halo et cyano,

m est égal à zéro ou un, et

$\Phi$ est un radical phényle éventuellement substitué par un ou plusieurs radicaux consistant en radicaux halo, trifluorométhyle, nitro, cyano, alkoxy comprenant 1 à 3 atomes de carbone, carbalkoxy comprenant 1 à 3 atomes de carbone, et alkylsulfinyle comprenant 1 à 3 atomes de carbone,

X est un atome d'oxygène ou de soufre, et

Y est un atome d'oxygène ou de soufre,

quantité suffisante pour augmenter la durée de vie dans le sol du thiocarbamate à condition que ledit composé organophosphoré ne consiste pas en O,O-diéthyl-S-éthyl-thioéthyl-phosphorodithioate.

11. Procédé pour contrôler la végétation indésirable, consistant à appliquer au lieu où le contrôle est recherché, à la fois:

— (a) une quantité efficace du point de vue herbicide d'un thiocarbamate présentant la formule:

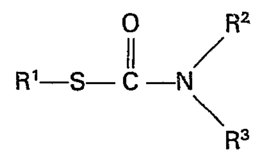

dans laquelle:

$R^1$ est un radical alkyle comprenant 1 à 6 atomes de carbone, alkényle comprenant 3 à 6 atomes de carbone, phénylalkyle comprenant 7 à 9 atomes de carbone, ou phényle, et est éventuellement substitué par un, deux ou trois atomes d'halogène, et

$R^2$ et $R^3$ sont choisis, indépendamment l'un de l'autre, parmi les radicaux alkyle comprenant 1 à 6 atomes de carbone et cycloalkyle comprenant 5 à 7 atomes de carbone, ou combinés pour former conjointement un radical alkylène comprenant 4 à 7 atomes de carbone;

— (b) une quantité d'un composé organophosphoré présentant la formule:

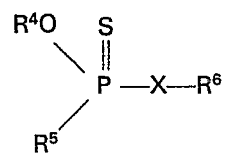

dans laquelle:

$R^4$ est un radical alkyle comprenant 1 à 4 atomes de carbone,

$R^5$ est un radical alkyle comprenant 1 à 4 atomes de carbone, alkoxy comprenant 1 à 4 atomes de carbone, ou alkylthio comprenant 1 à 4 atomes de carbone,

$R^6$ est un radical phénylalkyle comprenant 7 à 9 atomes de carbone, phényle, alkylsulfinylphényle comprenant 7 à 9 atomes de carbone, chlorophényle, ou alkylthioalkyle comprenant 2 à 6 atomes de carbone, nitrophényle, et

X est un atome d'oxygene ou de soufre,

quantité suffisante pour prolonger la durée de vie dans le sol du thiocarbamate à condition que ledit composé organophosphoré ne consiste pas en O,O-diéthyl-S-éthyl-thioéthyl-phosphorodithioate.

12. Procédé pour contrôler la végétation indésirable, consistant à appliquer au lieu où le contrôle est recherché, à la fois:

— (a) une quantité efficace du point de vue herbicide d'un thiocarbamate présentant la formule:

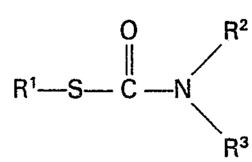

dans laquelle:

$R^1$ est un radical alkyle comprenant 1 à 6 atomes de carbone, alkényle comprenant 3 à 6 atomes de carbone, phénylalkyle comprenant 7 à 9 atomes de carbone, ou phényle, et est éventuellement substitué par un, deux ou trois atomes, d'halogène, et

$R^2$ et $R^3$ sont choisis, indépendamment l'un de l'autre, parmi les radicaux alkyle comprenant 1 à 6 atomes de carbone, et cycloalkyle comprenant 5 à 7 atomes de carbone, ou combinés pour former conjointement un radical alkylène comprenant 4 à 7 atomes de carbone;

et

— (b) une quantité d'O,O-diéthyl-O-phényl phosphorothioate suffisante pour prolonger la durée de vie dans le sol du thiocarbamate.

13. Procédé pour contrôler la végétation indésirable, consistant à appliquer au lieu où le contrôle est recherché, à la fois:

— (a) S-éthyl di-n-propylthiothiocarbamate, et

— (b) une quantité d'O,O-diéthyl-O-phényl phosphorothioate suffisante pour prolonger la durée de vie dans le sol du thiocarbamate.

14. Procédé pour contrôler la végétation indésirable, consistant à appliquer au lieu où le contrôle est recherché, à la fois:

— (a) S-éthyl diisobutylthiocarbamate, et

— (b) une quantité d'O,O-diéthyl-O-phényl phosphorothioate suffisante pour prolonger la durée de vie dans le sol du thiocarbamate.

15. Procédé selon l'une quelconque des revendications 10 à 14, caractérisé en ce que le rapport pondéral thiocarbamate/composé organophosphoré est compris entre 0,1/1 et 50/1.

16. Procédé selon l'une quelconque des revendications 10 à 14, caractérisé en ce que le rapport pondéral thiocarbamate/composé organophosphoré est compris entre 1/1 et 15/1.

17. Procédé selon l'une quelconque des revendications 10 à 14, caractérisé en ce qu'il consiste à appliquer une quantité efficace du point de vue antidote et non-phytotoxique d'un composé présentant la formule:

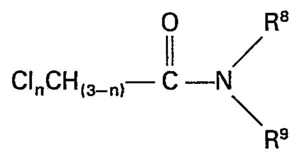

dans laquelle:

n est égal à 1 ou 2, et

$R^8$ et $R^9$ sont, indépendamment l'un de l'autre, un radical alkyle comprenant 1 à 12 atomes de carbone, ou alkényle comprenant 2 à 12 atomes de carbone, où

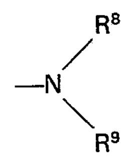

représente le groupe:

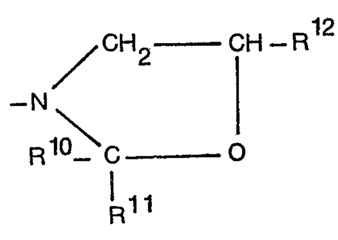

dans lequel:

$R^{10}$ et $R^{11}$, indépendamment l'un de l'autre, sont choisis dans le groupe comprenant l'atome d'hydrogène et le radical méthyle, et

$R^{12}$ et choisis dans le groupe consistant en hydrogène, alkyle comprenant 1 à 4 atomes de carbone, et phényle.

18. Procédé selon l'une quelconque des revendications 10 à 14, caractérisé en ce qu'il consiste à appliquer une quantité efficace du point de vue antidote et non-phytotoxique de N,N-diallyl dichloroacétamide.

19. Procédé pour prolonger la durée de vie dans le sol d'un thiocarbamate présentant la formule:

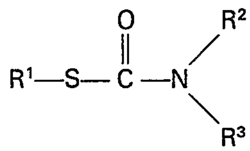

dans laquelle:

$R^1$ est un radical alkyle comprenant 1 à 6 atomes de carbone, alkényle comprenant 3 à 6 atomes de carbone, phénylalkyle comprenant 7 à 9 atomes de carbone, ou phényle, et est éventuellement substitué par un, deux ou trois atomes, d'halogène, et

$R^2$ et $R^3$ sont choisis, indépendamment l'un de l'autre, parmi les radicaux alkyle comprenant 1 à 6 atomes de carbone et cycloalkyle comprenant 5 à 7 atomes de carbone, ou combinés pour former conjointement un radical alkylène comprenant 4 à 7 atomes de carbone,

qui consiste à appliquer au sol contenant le thiocarbamate précédemment appliqué ou auquel ledit thiocarbamate sera ultérieurement appliqué, une quantité efficace d'un composé organophosphoré présentant la formule:

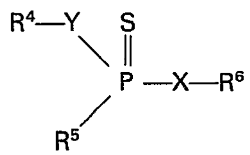

dans laquelle:

$R^4$ est un radical alkyle, comprenant 1 à 6 atomes de carbone, alkényle comprenant 3 à 6 atomes de carbone, alkynyle comprenant 3 à 6 atomes de carbone, ou cycloalkyle comprenant 5 à 7 atomes de carbone, et est éventuellement substitué par un ou plusieurs radicaux consistant en radicaux halo, cyano, alkoxy comprenant 1 à 3 atomes de carbone, et alkylthio comprenant 1 à 3 atomes de carbone,

$R^5$ est un radical alkyle comprenant 1 à 4 atomes de carbone, alkoxy comprenant 1 à 4 atomes de carbone, ou alkylthio comprenant 1 à 4 atomes de carbone,

$R^6$ est un radical alkyle comprenant 1 à 10 atomes de carbone, alkényle comprenant 2 à 10 atomes de carbone, ou alkynyle comprenant 2 à 4 atomes de carbone, éventuellement substitué par un ou plusieurs radicaux consistant en halo, nitro, cyano, alkoxy comprenant 1 à 3 atomes de carbone, et alkylthio comprenant 1 à 3 atomes de carbone, cycloalkyle comprenant 5 à 7 atomes de carbone, ou le groupe $-(R^7)_m-\Phi$ dans lequel:

$R^7$ est un radical alkyle comprenant 1 à 4 atomes de carbone, alkényle comprenant 2 à 4 atomes de carbone, ou alkynyle comprenant 2 à 4 atomes de carbone, éventuellement substitué par un ou plusieurs radicaux consistant en halo et cyano,

m est égal a zéro ou un, et

$\Phi$ est un radical phényle éventuellement substitué par un ou plusieurs radicaux consistant en radicaux halo, trifluorométhyle, nitro, cyano, alkoxy comprenant 1 à 3 atomes de carbone, carbalkoxy comprenant 1 à 3 atomes de carbone, et alkylsulfinyle comprenant 1 à 3 atomes de carbone,

X est un atome d'oxygéne ou de soufre, et

Y est un atome d'oxygène ou de soufre.

20. Procédé pour prolonger la durée de vie dans le sol d'un thiocarbamate présentant la formule:

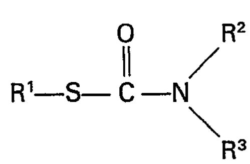

dans laquelle:

$R^1$ est un radical alkyle comprenant 1 à 6 atomes de carbone, alkényle comprenant 3 à 6 atomes de carbone, phénylalkyle comprenant 7 à 9 atomes de carbone, ou phényle, et est éventuellement substitué par un, deux ou trois atomes d'halogène, et

$R^2$ et $R^3$ sont choisis, indépendamment l'un de l'autre, parmi les radicaux alkyle comprenant 1 à 6 atomes de carbone et cycloalkyle comprenant 5 à 7 atomes de carbone, ou combinés pour former conjointement un radical alkylène comprenant 4 à 7 atomes de carbone,

qui consiste à appliquer au sol contenant le thiocarbamate précédemment appliqué ou auquel ledit thiocarbamate sera ultérieurement appliqué, une quantité efficace d'un composé organophosphoré présentant la formule:

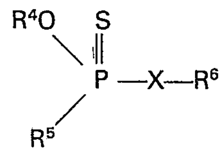

dans laquelle:

$R^4$ est un radical alkyle comprenant 1 à 4 atomes de carbone

$R^5$ est un radical alkyle comprenant 1 à 4 atomes de carbone, alkoxy comprenant 1 à 4 atomes de carbone, ou alkylthio comprenant 1 à 4 atomes de carbone,

$R^6$ est un radical phényle, chlorophényle, nitrophényle, alkylsulfinylphényle comprenant 7 à 9 atomes de carbone, phénylalkyle comprenant 7 à 9 atomes de carbone, ou alkylthioalkyle comprenant 2 à 6 atomes de carbone, et

X est un atome d'oxygène ou de soufre.

21. Procédé pour prolonger la durée de vie dans le sol d'un thiocarbamate présentant la formule:

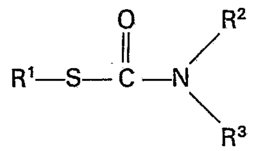

dans laquelle:

$R^1$ est un radical alkyle comprenant 1 à 6 atomes de carbone, alkényle comprenant 3 à 6 atomes de carbone, phénylalkyle comprenant 7 à 9 atomes de carbone, ou phényle, et est éventuellement substitué par un, deux ou trois atomes d'halogène, et

$R^2$ et $R^3$ sont choisis, indépendamment l'un de l'autre, parmi les radicaux alkyle comprenant 1 à 6 atomes de carbone et cycloalkyle comprenant 5 à 7 atomes de carbone, ou combinés pour former conjointement un radical alkylène comprenant 4 à 7 atomes de carbone,
qui consiste à appliquer au sol contenant le thiocarbamate précédemment appliqué ou auquel ledit thiocarbamate sera ultérieurement appliqué, une quantité efficace d'O,O-diéthyl-O-phényl phosphorothioate.

22. Procédé pour prolonger la durée de vie dans le sol d'un S-éthyl di-n-propylthiocarbamate, qui consiste à appliquer au sol contenant le thiocarbamate précédemment appliqué ou auquel ledit thiocarbamate sera ultérieurement appliqué, une quantité efficace d'O,O-diéthyl-O-phényl phosphorothioate.

23. Procédé pour prolonger la durée de vie dans le sol d'un S-éthyl diisobutylthiocarbamate, qui consiste à appliquer au sol contenant le thiocarbamate précédemment appliqué ou auquel ledit thiocarbamate sera ultérieurement appliqué, une quantité efficace d'O,O-diéthyl-O-phényl phosphorothioate.

24. Procédé selon l'une quelconque des revendications 19 à 23, caractérisé en ce que le rapport pondéral thiocarbamate/composé organophosphoré est compris entre 0,1/1 et 50/1.

25. Procédé selon l'une quelconque des revendications 19 à 23, caractérisé en ce que le rapport pondéral thiocarbamate/composé organophosphoré est compris entre 1/1 et 15/1.

26. Procédé selon l'une quelconque des revendications 19 à 23, caractérisé en ce qu'il consiste à appliquer une quantité efficace du point de vue antidote et non-phytotoxique d'un composé présentant la formule:

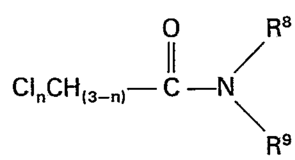

dans laquelle:

n est égal à 1 ou 2, et

$R^8$ et $R^9$ sont choisis, indépendamment l'un de l'autre, parmi les radicaux alkyle comprenant 1 à 12 atomes de carbone, ou alkényle comprenant 2 à 12 atomes de carbone, où

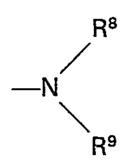

représente le groupe:

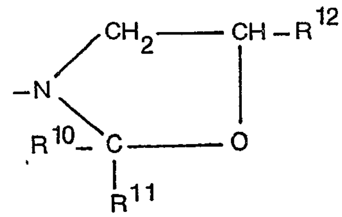

dans lequel:

$R^{10}$ et $R^{11}$ sont choisis, indépendamment l'un de l'autre, dans le groupe comprenant l'atome d'hydrogène et le radical méthyle et

$R^{12}$ est choisis dans le groupe consistant en hydrogène, alkyle comprenant 1 à 4 atomes de carbone, et phényle.

27. Procédé selon l'une quelconque des revendications 19 à 23, caractérisé en ce qu'il consiste à appliquer une quantité efficace du point de vue antidote et non-phytotoxique de N,N-diallyl dichloroacétamide.

**Patentansprüche**

1. Herbizide Kombination enthaltend

(a) eine herbizid wirksame Menge eine Thiocarbamats der Formel

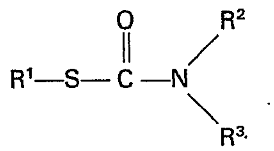

in der

$R^1$ ein $C_1$—$C_6$-Alkyl ist, das wahlweise mit einem, zwei oder drei Halogenatomen substituiert sein kann, und

$R^2$ und $R^3$ unabhängig voneinander $C_1$—$C_6$-Alkyl bedeuten,

und

(b) eine zur Verlängerung der Existenz des Thiocarbamats im Boden ausreichende Menge einer Organophosphorverbindung der Formel

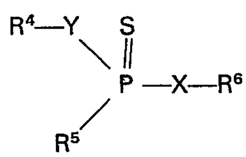

in der

$R^4$ ein $C_1$—$C_6$-Alkyl, $C_3$—$C_6$-Alkenyl, $C_3$—$C_6$-Alkinyl oder $C_5$—$C_7$-Cycloalkyl ist und wahlweise mit einem oder mehreren der Substituenten Halogen, Cyano, $C_1$—$C_3$-Alkoxy und $C_1$—$C_3$-Alkylthio substituiert sein kann,

$R^5$ ein $C_1$—$C_4$-Alkyl, $C_1$—$C_4$-Alkoxy oder $C_1$—$C_4$-Alkylthio ist,

$R^6$ ein $C_1$—$C_{10}$-Alkyl, $C_2$—$C_{10}$-Alkenyl oder $C_2$—$C_4$-Alkinyl ist, das wahlweise substituiert sein kann mit einem oder mehreren der Substituenten Halogen, Nitro, Cyano, $C_1$—$C_3$-Alkoxy und $C_1$—$C_3$-Alkylthio, ferner $C_5$—$C_7$-Cycloalkyl oder —$(R^7)_m$—$\Phi$ ist, wobei

$R^7$ ein $C_1$—$C_4$-Alkyl, $C_2$—$C_4$-Alkenyl oder $C_2$—$C_4$-Alkinyl ist, das wahlweise substituiert sein kann mit einem oder mehreren der Substituenten Halogen und Cyano,

m Null oder 1 ist und

$\Phi$ ein Phenyl ist, das wahlweise substituiert sein kann mit einem oder mehreren der Substituenten Halogen, Trifluormethyl, Nitro, Cyano, $C_1$—$C_3$-Alkoxy, $C_1$—$C_3$-Carbalkoxy und $C_1$—$C_3$-Alkylsulfinyl,

X Sauerstoff oder Schwefel ist und

Y Sauerstoff oder Schwefel ist.

2. Herbizide Kombination enthaltend

(a) eine herbizid wirksame Menge eines Thiocarbamats der Formel

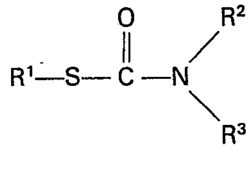

in der

$R^1$ ein $C_1$—$C_6$-Alkyl ist, das wahlweise substituiert sein kann, mit einem, zwei oder Halogenatomen und

$R^2$ und $R^3$ unabhängig $C_1$—$C_6$-Alkyl sind, und

(b) eine zur Verlängerung der Existenz des Thiocarbamats im Boden ausreichende Menge einer Organophosphorverbindung

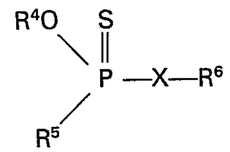

in der

$R^4$ ein $C_1$—$C_4$-Alkyl,

$R^5$ ein $C_1$—$C_4$-Alkyl, $C_1$—$C_4$-Alkoxy oder $C_1$—$C_4$-Alkylthio ist,

$R^6$ Phenyl, Chlorphenyl, Nitrophenyl, $C_7$—$C_9$-Alkylsulfinylphenyl, $C_7$—$C_9$-Phenylalkyl oder $C_2$—$C_6$-Alkylthioalkyl ist und

X Sauerstoff oder Schwefel ist.

3. Herbizide Kombination enthaltend

(a) eine herbizid wirksame Menge eines Thiocarbamats der Formel

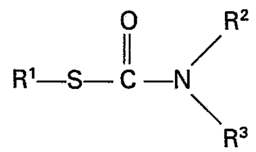

in der

$R^1$ $C_1$—$C_6$-Alkyl ist, wahlweise substituiert mit einem, zwei oder drei Halogenatomen, und

$R^2$ und $R^3$ unabhängig voneinander $C_1$—$C_6$-Alkyl sind, und

(b) in einer zur Verlängerung der Existenz des Thiocarbamats im Boden ausreichenden Menge O,O-Diethyl-O-phenyl-thiophosphat.

4. Herbizide Kombination enthaltend

(a) S-Ethyl-di-n-propylthiocarbamat und

(b) in einer zur Verlängerung der Existenz des Thiocarbamats im Boden ausreichenden Menge O,O-Diethyl-O-phenyl-thiophosphat.

5. Herbizide Kombination enthaltend

(a) S-Ethyl-diisobutylthiocarbamat und

(b) in einer zur Verlängerung der Existenz des Thiocarbamats im Boden ausreichenden Menge O,O-Diethyl-O-phenyl-thiophosphat.

6. Kombination nach einem der Ansprüche 1 bis 5, dadurch gekennzeichnet, daß das Gewichtsverhältnis des Thiocarbamats zur Organophosphorverbindung im Bereich von 0,1:1 bis 50:1 liegt.

7. Kombination nach einem der Ansprüche 1 bis 5, dadurch gekennzeichnet, daß das Gewichtsverhältnis des Thiocarbamats zur Organophosphorverbindung im Bereich von 1:1 bis 15:1 liegt.

8. Kombination nach einem der Ansprüche 1 bis 5, weiterhin enthaltend in einer als Gegenmittel wirksamen Menge eine nichtphytotoxische Substanz der Formel

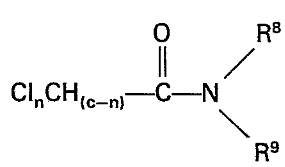

in der N 1 oder 2 ist und $R^8$ und $R^9$ unabhängiog voneinander $C_1$—$C_{12}$-Alkyl oder $C_2$—$C_{12}$-Alkenyl bedeuten oder

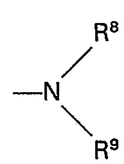

einen Rest der Formel

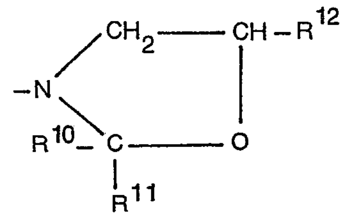

bedeutet, in dem $R^{10}$ und $R^{11}$ unabhängig voneinander Wasserstoff oder Methyl bedeuten und $R^{12}$ Wasserstoff, $C_1$—$C_4$-Alkyl oder Phenyl ist.

9. Kombination nach einem der Ansprüche 1 bis 5, weiterhin enthaltend N,N-Diallyl-dichloracetamid in einer nichtphytotoxischen und als Gegenmittel wirksamen Menge.

10. Verfahren zur Unterdrückung von Schadvegetation, gekennzeichnet durch eine am Ort der angestrebten Unterdrückung erfolgende Anwendung sowohl

(a) einer herbizid wirksamen Menge eines Thiocarbamats der Formel

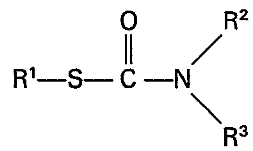

in der

$R^1$ ein $C_1$—$C_6$-Alkyl, $C_3$—$C_6$-Alkenyl, $C_7$—$C_9$-Phenylalkyl oder Phenyl ist und wahlweise einem, zwei oder drei Halogenatomen substituiert sein kann und

$R^2$ und $R^3$ entweder unabhängig voneinander $C_1$—$C_6$-Alkyl oder $C_5$—$C_7$-Cycloalkyl sind oder kombiniert miteinander gemeinsam ein $C_4$—$C_7$-Alkylen sind; als auch

(b) in einer zur Verlängerung der Existenz des Thiocarbamats im Boden ausreichenden Menge einer Organophosphorverbindung der Formel

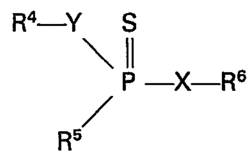

in der

$R^4$ ein $C_1$—$C_6$-Alkyl, $C_3$—$C_6$-Alkenyl, $C_3$—$C_6$-Alkinyl oder $C_5$—$C_7$-Cycloalkyl ist und wahlweise mit einem oder mehreren der Substituenten Halogen, Cyano, $C_1$—$C_3$-Alkoxy und $C_1$—$C_3$-Alkylthio substituiert sein kann,

$R^5$ ein $C_1$—$C_4$-Alkyl, $C_1$—$C_4$-Alkoxy oder $C_1$—$C_4$-Alkylthio ist,

$R^6$ ein $C_1$—$C_{10}$-Alkyl, $C_2$—$C_{10}$-Alkenyl oder $C_2$—$C_4$-Alkinyl ist, wahlweise substituiert mit einem oder mehreren der Substituenten Halogen, Nitro, Cyano, $C_1$—$C_3$-Alkoxy und $C_1$—$C_3$-Alkylthio, $C_5$—$C_7$-Cycloalkyl ist oder —$(R^7)_m$—Φ ist, wobei

$R^7$ ein $C_1$—$C_4$-Alkyl, $C_2$—$C_4$-Alkenyl oder $C_2$—$C_4$-Alkinyl ist, wahlweise substituiert mit einem oder mehreren der Substituenten Halogen und Cyano,

m Null oder 1 ist und

Φ Phenyl ist, wahlweise substituiert mit einem oder mehreren der Substituenten Halogen, Trifluormethyl, Nitro, Cyano, $C_1$—$C_3$-Alkoxy, $C_1$—$C_3$-Carbalkoxy und $C_1$—$C_3$-Alkylsulfinyl,

X Sauerstoff oder Schwefel ist und

Y Sauerstoff oder Schwefel ist,

wobei die Organophosphorverbindung nicht das O,O-Diethyl-S-ethylthioethyl-dithiophosphat ist.

11. Verfahren zur Unterdrückung von Schadvegetation, gekennzeichnet durch eine am Ort der benötigten Unterdrückung erfolgende Anwendung sowohl

(a) einer herbizidwirksamen Menge eines Thiocarbamats der Formel

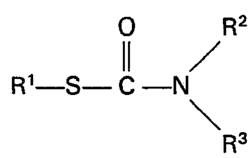

in der

$R^1$ ein $C_1$—$C_6$-Alkyl, $C_3$—$C_6$-Alkenyl, $C_7$—$C_9$-Phenylalkyl oder Phenyl ist und wahlweise mit einem, zwei oder drei Halogenatomen substituiert sein kann, und

$R^2$ und $R^3$ entweder unabhängig voneinander $C_1$—$C_6$-Alkyl oder $C_5$—$C_7$-Cycloalkyl sind oder kombiniert miteinander gemeinsam ein $C_4$—$C_7$-Alkylen bilden, als auch

(b) in einer zur Verlängerung der Existenz des Thiocarbamats im Boden ausreichenden Menge einer Organophosphorverbindung der Formel

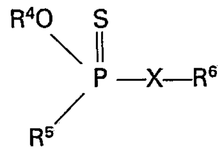

in der

$R^4$ ein $C_1$—$C_4$-Alkyl ist,

$R^5$ ein $C_1$—$C_4$-Alkyl, $C_1$—$C_4$-Alkoxy oder $C_1$—$C_4$-Alkylthio ist,

$R^6$ Phenyl, Chlorphenyl, Nitrophenyl, $C_7$—$C_9$-Alkylsulfinylphenyl, $C_7$—$C_9$-Phenylalkyl oder $C_1$—$C_6$-Alkylthioalkyl ist, und

X Sauerstoff oder Schwefel ist,

solange die Organophosphorverbindung nicht das O,O-Diethyl-S-ethylthioethyl-dithiophosphat ist.

12. Verfahren zur Unterdrückung von Schadvegetation, gekennzeichnet durch die am Ort der benötigten Unterdrückung erfolgende Anwendung sowohl

(a) einer herbizid wirksamen Menge eines Thiocarbamats der Formel

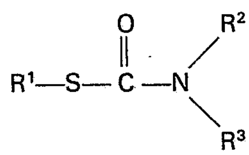

in der

$R^1$ ein $C_1$—$C_6$-Alkyl, $C_3$—$C_6$-Alkenyl, $C_7$—$C_9$-Phenylalkyl oder Phenyl ist und wahlweise mit einem, zwei oder drei Halogenatomen substituiert sein kann, und

$R^2$ und $R^3$ entweder unabhängig voneinander ein $C_1$—$C_6$-Alkyl oder $C_5$—$C_7$-Cycloalkyl sind oder kombiniert miteinander zusammen ein $C_4$—$C_7$-Alkylen bilden können, als auch

(b) O,O-Diethyl-O-phenyl-thiophosphat in einer zur Verlängerung der Existenz des Thiocarbamats im Boden ausreichenden Menge.

13. Verfahren zur Unterdrückung von Schadvegetation, gekennzeichnet durch die am Ort der benötigten Unterdrückung erfolgende Anwendung von sowohl

(a) S-Ethyl-di-n-propylthiocarbamat als auch

(b) von O,O-Diethyl-O-phenyl-thiophosphat in einer zur Verlängerung der Existenz des Thiocarbamats im Boden ausreichenden Menge.

14. Verfahren zur Unterdrückung von Schadvegetation, gekennzeichnet durch die am Ort der zu beabsichtigten Unterdrückung erfolgende Anwendung von sowohl

(a) S-Ethyl-diisobutylthiocarbamat als auch

(b) von O,O-Diethyl-O-phenyl-thiophosphat in einer zur Verlängerung der Existenz des Thiocarbamats im Boden ausreichenden Menge.

15. Verfahren nach einem der Ansprüche 10 bis 14, dadurch gekennzeichnet, daß das Gewichtsverhältnis des Thiocarbamats zur Organophsophorverbindung im Bereich von 0,1:1 bis 50:1 liegt.

16. Verfahren nach einem der Ansprüche 10 bis 14, dadurch gekennzeichnet, daß das Gewichtsverhältnis des Thiocarbamats zur Organophosphorverbindung im Bereich von 1:1 bis 15:1 liegt.

17. Verfahren nach einem der Ansprüche 10 bis 14, dadurch gekennzeichnet, daß weiterhin in einer nichtphytotoxischen und zur Erzielung einer Wirkung als Gegenmittel ausreichenden Menge eine Substanz der Formel

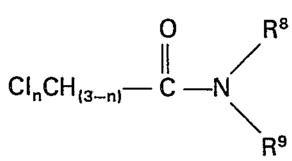

angewendet wird, in der n 1 oder 2 ist, $R^8$ und $R^9$ unabhängig voneinander $C_1$—$C_{12}$-Alkyl oder $C_2$—$C_{12}$-Alkenyl sind oder

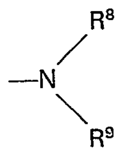

einen Rest

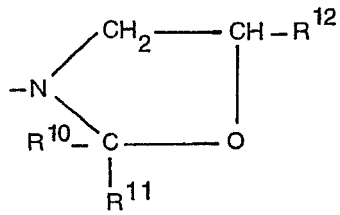

bedeutet, in dem $R^{10}$ und $R^{11}$ unabhängig voneinander Wasserstoff oder Methyl sind und $R^{12}$ Wasserstoff, $C_1$—$C_4$-Alkyl oder Phenyl ist.

18. Verfahren nach einem der Ansprüche 10 bis 14, dadurch gekennzeichnet, daß zusätzlich in einer nichtphytotoxischen und zur Erzielung einer Wirkung als Gegenmittel ausreichenden Menge N,N-Diallyl-dichlorazetamid angewendet wird.

19. Verfahren zur Verlängerung der Existenz eines Thiocarbamats der Formel

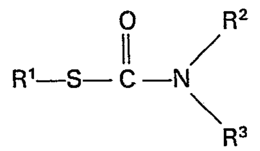

in der

$R^1$ ein $C_1$—$C_6$-Alkyl, $C_3$—$C_6$-Alkenyl, $C_7$—$C_9$-Phenylalkyl, $C_7$—$C_9$-Phenylalkyl oder Phenyl ist und wahlweise mit einem, zwei oder drei Halogenatomen substituiert sein kann, und

$R^2$ und $R^3$ entweder unabhängig voneinander $C_1$—$C_6$-Alkyl oder $C_5$—$C_7$-Cycloalkyl sind oder kombiniert miteinander gemeinsam ein $C_4$—$C_7$-Alkylen bilden, im Boden, dadurch gekennzeichnet, daß auf dem Boden, auf den zuvor das Thiocarbamat angewendet worden ist oder auf das das Thiocarbamat später aufgebracht werden soll, eine wirksame Menge einer Organophosphorverbindung zur Anwendung gebracht wird, die die Formel

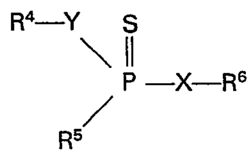

hat, in der

$R^4$ ein $C_1$—$C_6$-Alkyl, $C_3$—$C_6$-Alkenyl, $C_3$—$C_6$-Alkinyl oder $C_5$—$C_7$-Cycloalkyl ist und wahlweise mit einem oder mehreren der Substituenten Halogen, Cyano, $C_1$—$C_3$-Alkoxy und $C_1$—$C_3$-Alkylthio substituiert sein kann,

$R^5$ ein $C_1$—$C_4$-Alkyl, $C_1$—$C_4$-Alkoxy oder $C_1$—$C_4$-Alkylthio ist,

$R^6$ ein $C_1$—$C_{10}$-Alkyl, $C_2$—$C_{10}$-Alkenyl oder $C_2$—$C_4$-Alkinyl ist, wahlweise substituiert mit einem oder mehreren der Substituenten Halogen, Nitro, Cyano, $C_1$—$C_3$-Alkoxy und $C_1$—$C_3$-Alkylthio, oder $C_5$—$C_7$-Cycloalkyl ist oder —$(R^7)_m$—Φ bedeutet, wobei

$R^7$ ein $C_1$—$C_4$-Alkyl, $C_2$—$C_4$-Alkenyl oder $C_2$—$C_4$-Alkinyl ist, wahlweise substituiert mit einem oder mehreren der Substituenten Halogen und Cyano,

m Null oder 1 ist und

Φ Phenyl ist, das wahlweise mit einem oder mehreren Substituenten Halogen, Trifluormethyl, Nitro, Cyano, $C_1$—$C_3$-Alkoxy, $C_1$—$C_3$-Carbalkoxy und $C_1$—$C_3$-Alkylsulfinyl substituiert sein kann,

X Sauerstoff oder Schwefel ist und

Y Sauerstoff oder Schwefel ist.

20. Verfahren zur Verlängerung der Existenz eines Thiocarbamats der Formel

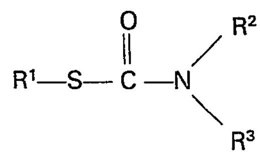

im Boden, wobei in der vorstehenden Formel

$R^1$ ein $C_1$—$C_6$-Alkyl, $C_3$—$C_6$-Alkenyl, $C_7$—$C_9$-Phenylalkyl oder Phenyl ist und wahlweise mit einem, zwei oder drei Halogenatomen substituiert sein kann und

$R^2$ und $R^3$ entweder unabhängig voneinander $C_1$—$C_6$-Alkyl oder $C_5$—$C_7$-Cycloalkyl sind oder kombiniert miteinander gemeinsam ein $C_4$—$C_7$-Alkylen bilden, dadurch gekennzeichnet, daß auf den das Thiocarbamat enthaldenden Boden oder auf den Boden, auf den des das Thiocarbamat angewendet werden soll, mit einer wirksamen Menge einer Organophosphorverbindung beaufschlagt wird, die die Formel

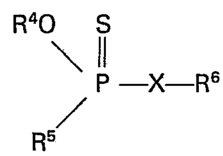

hat, in der

$R^4$ ein $C_1$—$C_4$-Alkyl,

$R^5$ ein $C_1$—$C_4$-Alkyl, $C_1$—$C_4$-Alkoxy oder $C_1$—$C_4$-Alkylthio ist,

$R^6$ Phenyl, Chlorphenyl, Nitrophenyl, $C_7$—$C_9$-Alkylsulfinylphenyl, $C_7$—$C_9$-Phenylalkyl oder $C_2$—$C_6$-Alkylthioalkyl ist und

X Sauerstoff oder Schwefel ist.

21. Verfahren zur Verlängerung der Existenz eines Thiocarbamats der Formel

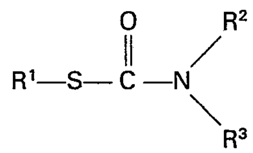

im Boden, wobei in der vorstehenden Formel

$R^1$ ein $C_1$—$C_6$-Alkyl, $C_3$—$C_6$-Alkenyl, $C_7$—$C_9$-Phenylalkyl oder ein Phenyl ist und wahlweise mit einem, zwei oder drei Halogenatomen substituiert sein kann, und

$R^2$ und $R^3$ entweder unabhängig voneinander $C_1$—$C_6$-Alkyl oder $C_5$—$C_7$-Cycloalkyl sind oder kombiniert miteinander gemeinsam ein $C_4$—$C_7$-Alkylen bilden, dadurch gekennzeichnet, daß der das Thiocarbamat enthaltende Boden oder der Boden, auf dem das Thiocarbamat eingesetzt werden soll, mit einer wirksamen Menge von O,O-Diethyl-O-phenyl-thiophosphat behandelt wird.

22. Verfahren zur Verlängerung der Bodenbeständigkeit von S-Ethyl-di-n-propylthiocarbamat, dadurch gekennzeichnet, daß der das Thiocarbamat enthaltende Boden bzw. der mit dem Thiocarbamat zu behandelnde Boden mit einer wirksamen Menge von O,O-Diethyl-O-phenyl-thiophosphat behandelt wird.

23. Verfahren zur Verlängerung der Lebensdauer von S-Ethyl-diisobutylthiocarbamat im Boden, dadurch gekennzeichnet, daß auf dem das Thiocarbamat enthaltenden Boden bzw. auf dem mit dem Thiocarbamat zu behandelnden Boden eine wirksame Menge von O,O-Diethyl-O-phenyl-thiophosphat zur Anwendung gebracht wird.

24. Verfahren nach einem der Ansprüche 19 bis 23, dadurch gekennzeichnet, daß das Gewichtsverhältnis des Thiocarbamats zur Organophosphorverbindung im Bereich von 0,1:1 bis 50:1 liegt.

25. Verfahren nach einem der Ansprüche 19 bis 23, dadurch gekennzeichnet, daß das Gewichtsverhältnis des Thiocarbamats zur Organophosphorverbindung im Bereich von 1:1 bis 15:1 liegt.

26. Verfahren nach einem der Ansprüche 19 bis 23, dadurch gekennzeichnet, daß weiterhin in einer nichtphytotoxischen und als Gegenmittel wirksamen Menge eine Substanz der Formel

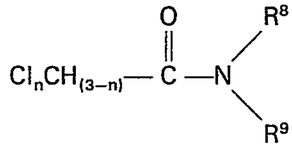

zur Anwendung gebracht wird, in der n 1 oder 2 ist, $R^8$ und $R^9$ unabhängig voneinander $C_1$—$C_{12}$-Alkyl oder $C_2$—$C_{12}$-Alkenyl sind oder

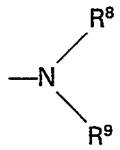

einen Rest der Formel

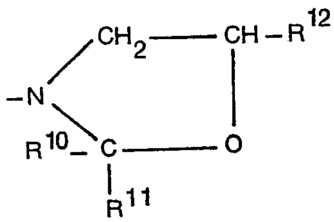

ist, in der $R^{10}$ und $R^{11}$ unabhängig voneinander Wasserstoff oder Methyl sind und $R^{12}$ Wasserstoff, $C_1$—$C_4$-Alkyl oder Phenyl sind.

27. Verfahren nach einem der Ansprüche 19 bis 23, dadurch gekennzeichnet, daß weiterhin in einer nichtphytotoxischen und als Gegenmittel wirksamen Menge N,N-Diallyl-dichloroacetamid angewendet wird.